(19) Europäisches Patentamt
European Patent Office
Office européen des brevets

(11) **EP 4 480 698 A1**

(12) **EUROPEAN PATENT APPLICATION**
published in accordance with Art. 153(4) EPC

(43) Date of publication:
25.12.2024 Bulletin 2024/52

(21) Application number: 23752950.8

(22) Date of filing: 09.02.2023

(51) International Patent Classification (IPC):
*B32B 27/00* (2006.01)    *B65D 30/02* (2006.01)
*B65D 30/16* (2006.01)    *B65D 33/02* (2006.01)
*B65D 65/40* (2006.01)

(52) Cooperative Patent Classification (CPC):
B32B 27/00; B65D 29/00; B65D 33/02;
B65D 65/40; Y02W 30/80

(86) International application number:
PCT/JP2023/004448

(87) International publication number:
WO 2023/153488 (17.08.2023 Gazette 2023/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.02.2022 JP 2022020582
14.11.2022 JP 2022181793

(71) Applicant: Toppan Holdings Inc.
Tokyo 110-0016 (JP)

(72) Inventors:
• NAGAI, Aki
Tokyo 110-0016 (JP)
• ONO, Yasunori
Tokyo 110-0016 (JP)
• FUJIMOTO, Yuto
Tokyo 110-0016 (JP)
• TAKEI, Jiro
Tokyo 110-0016 (JP)

(74) Representative: TBK
Bavariaring 4-6
80336 München (DE)

(54) **STAND-UP PACKING BAG**

(57) A self-supporting packaging bag according to the present disclosure, which is formed by heat-sealing two body portions each including a substrate layer and a sealant layer, to a bottom tape including a substrate layer and a sealant layer and having a mountain fold, includes two side seal portions adhering the two body portions to each other in a vertical direction of the self-supporting packaging bag; and bottom seal portions adhering the respective two body portions to the bottom tape in a horizontal direction of the self-supporting packaging bag, wherein the substrate layers and the sealant layers are made of similar resin materials; a ratio a/L of a minimum width a of each of the bottom seal portions to a distance L from a base of each of the body portions to the mountain fold is 0.15 or greater and 0.50 or less; and when a boundary between each of the bottom seal portions and an unsealed portion is defined to be a bottom seal line, an angle $\alpha$ between the mountain fold and the bottom seal line at a point where the mountain fold and the bottom seal line intersect is 20° or greater and 45° or less.

EP 4 480 698 A1

# FIG.1

## Description

[Technical Field]

The present disclosure relates to self-supporting packaging bags.

[Background Art]

Packaging bags, as a type of packaging materials, constituted of a single film using a plastic film as a substrate, or a laminate using a plastic film as a substrate, are widely used. These packaging bags have a variety of modes for use in a wide range of applications and are becoming essential to people's lives today.

Various materials are combined and used for forming packaging bags, depending on, for example, nature and quantity of contents, post-processing to prevent deterioration of contents, forms of transporting packages (packaging bags containing contents), methods of opening the packages, and methods of disposing the packages.

For example, packaging bags are also used as liquid containers due to the excellent water resistance of plastic films, and are also widely used in the field of beverage containers and food containers such as for retort food, as well as in the field of daily necessities and toiletries. In this way, a variety of products are now crowded on the shelves of supermarkets, drug stores, and convenience stores. In addition, various other applications are being developed, mainly for liquid containers.

The advantages of packaging bags include that they are cheaper than containers such as cans and bottles, materials thereof can be designed in conformity with the required quality, and they are lightweight and space-saving before filling and during distribution and storage. Furthermore, packaging bags can be said to be environmentally friendly from the perspective of reducing waste.

Also, high-definition printing on the layers visible from the surfaces of packaging bags can improve the image of the products and can display information related to the contents, while printed barcodes, etc. can be sources of product distribution and marketing information.

Self-supporting packaging bags such as standing pouches can make products stand out on store shelves, and thus the scope of applications is expanding. To ensure that the entirety of a pouch is visible without bending in the middle, the laminate film constituting the pouch is required to have some degree of rigidity. If the contents of the pouch are liquid or semi-solid (e.g., cooked rice or a mixture of liquid and solid), the pouch is required to be strong enough to prevent the bag from breaking due to the impact of falling, so that the contents will not leak. To support these functions, laminates combining polyester films, nylon films, polyolefin films, etc. have been used (see PTLs 1 and 2).

[Citation List]

[Patent Literature]

PTL 1: JP H7-237281 A

PTL 2:JP H7-241967 A

[Summary of the Invention]

[Technical Problem]

In recent years, as awareness of environmental issues has increased, technology is being considered to recycle the packaging material as a single material by constituting laminate films for forming a packaging material from similar materials. This is called monomaterialization of a packaging material. As mentioned above, packaging materials of the conventional art have improved required physical properties such as drop impact resistance by combining various different materials. However, if a packaging material is constituted of similar materials, there is an issue that sufficient drop impact resistance is difficult to ensure.

The present disclosure has a first aim of providing a self-supporting packaging bag which is useful for achieving monomaterialization and has sufficient drop impact resistance.

The packaging bags described in PTLs 1 and 2 attempt to solve the issue of breakage due to drop impact by selecting the material composition and thickness of the laminate. However, this is only an attempt to improve strength by combining polyethylene terephthalate films, polyamide films, and polyolefin films, and is incompatible with monomaterialization. Furthermore, increasing breaking resistance of the bag may affect other properties, and excessive quality is inevitably required.

However, monomaterialized packaging bags may narrow flexibility in material selection. Thus, as mentioned above, for example, when a drop impact is applied to a packaging bag filled with contents, there has been a risk that the bag may break from the body portions, sealed portions of the bottom, mountain fold of the bottom, etc.

In particular, when the material composition of the laminates is all-polyolefin such as all-polyethylene and all-polypropylene, there has been a risk that the bag will break due to drop impact. This is particularly noticeable when the temperature of the packaging bag is low.

On the other hand, environmental problems caused by plastic materials are becoming more serious, and material compositions that can be thoroughly recycled as monomaterial packaging materials should be welcomed. Thus, there is a strong need to improve the performance of material compositions even when they are all-polyolefin such as all-polyethylene and all-polypropylene.

The present disclosure has been made in light of the circumstances set forth above, and has a second aim of providing a monomaterialized self-supporting packaging bag that can improve drop impact resistance without changing the appearance, without using separate members or an excessive material composition for reinforcement, and without sacrificing self-supporting properties.

[Solution to Problem]

A self-supporting packaging bag according to an aspect of the present disclosure, which is formed by heat-sealing two body portions each including a substrate layer and a sealant layer, to a bottom tape including a substrate layer and a sealant layer and having a mountain fold, includes two side seal portions adhering the two body portions to each other in a vertical direction of the self-supporting packaging bag; and bottom seal portions adhering the respective two body portions to the bottom tape in a horizontal direction of the self-supporting packaging bag, wherein the substrate layers and the sealant layers are made of similar resin materials; a ratio a/L of a minimum width a of each of the bottom seal portions to a distance L from a base of each of the body portions to the mountain fold is 0.15 or greater and 0.50 or less; and when a boundary between each of the bottom seal portions and an unsealed portion is defined to be a bottom seal line, an angle $\alpha$ between the mountain fold and the bottom seal line at a point where the mountain fold and the bottom seal line intersect is 20° or greater and 45° or less.

In the self-supporting packaging bag, when an elastic modulus of a sealant used for the body portions is represented by A, and an elastic modulus of a sealant used for the bottom tape is represented by B, the following relationship may be established:

$$B < 800 \text{ MPa}$$

In the self-supporting packaging bag, when an elastic modulus of a sealant used for the body portions is represented by A, and an elastic modulus of a sealant used for the bottom tape is represented by B, the following relationship may be established:

$$A \geq B$$

In the self-supporting packaging bag, when an elastic modulus of a sealant used for the body portions is represented by A, and an elastic modulus of a sealant used for the bottom tape is represented by B, the following relationship may be established at least for the elastic modulus B:

$$B \leq 600 \text{ MPa}$$

In the self-supporting packaging bag, the angle $\alpha$ may be 25° or greater and less than 30°.

In the self-supporting packaging bag, the angle $\alpha$ may be 40° or greater and 45° or less.

In the self-supporting packaging bag, conditions expressed by the following Inequality (1) may be satisfied:

$$0.4 \leq W/2L \leq 0.8 \ ... \ (1)$$

[In the inequality, W represents an opening width of the self-supporting packaging bag, and L represents a distance from a base of each of the body portions to the mountain fold.]

In the self-supporting packaging bag, the packaging bag may further include joints at which the two body portions are adhered to each other through respective cutouts, the cutouts being provided to respective sides of the bottom tape;

and a ratio S2/S1 of an area S2 of each of the joints to an area S1 of a region R1 may be 0.35 or greater and 0.60 or less, the region R1 being located between the base of each of the body portions and the mountain fold and extending a distance of 10 mm from a side of each of the body portions in an orthogonal direction.

In the self-supporting packaging bag, the two body portions and the bottom tape may each include a gas barrier layer.

In the self-supporting packaging bag, the self-supporting packaging bag may be used in applications where heat treatment is performed at a temperature of 80°C or higher.

[Advantageous Effects of the Invention]

According to a first aspect of the present disclosure, there is provided a self-supporting packaging bag which is useful for achieving monomaterialization and has sufficient drop impact resistance.

According to a second aspect of the present disclosure, there can be provided a packaging bag including a bottom tape and having self-supporting properties, which is capable of improving drop impact resistance without using an excessive material composition for reinforcement, and without sacrificing self-supporting properties.

The self-supporting packaging bag is formed by heat-sealing two body portions each including a substrate layer and a sealant layer, to a bottom tape including a substrate layer and a sealant layer and having a mountain fold, and thus when the contents are filled in, the bottom tape is expanded by the weight of the contents, forming a boat-shaped bottom such that the packaging bag can be self-supporting.

In peripheral portions of the respective body portions, both right and left sides of one body portion are sealed to those of another body portion at the respective side seal portions. The inner edge of each of the side seal portions is a boundary with an unsealed portion and is referred to as a side seal line.

In the lower part of the body portions, the bottom tape, which is mountain-folded with the sealant layer of the laminate on the outside, is sandwiched between the two laminates of the body portions and sealed at bottom seal portions to form a bottom, and thus a space in which the contents can be filled can be defined by the unsealed portions between the front and rear body portions. These boundaries are each referred to as a bottom seal line.

At the intersection between the side seal line and the bottom seal line, the angle $\alpha$ between the inclination of the convex bottom seal line curved downward and the horizontal ridge of the mountain fold of the bottom tape, as defined herein, is $20° \leq$ angle $\alpha \leq 45°$, and thus there can be provided a packaging bag capable of improving drop impact resistance without using an excessive material composition for reinforcement, and without sacrificing self-supporting properties.

Furthermore, a self-supporting packaging bag formed of a packaging material with relatively low drop impact resistance, such as a monomaterial packaging material composed of polyethylene alone, polypropylene alone, or polyolefin alone, can be provided as a self-supporting packaging bag capable of improving drop impact resistance without using an excessive material composition for reinforcement, and without sacrificing self-supporting properties, which are the issues to be solved. Such a self-supporting packaging bag is also effective for purposes such as of ensuring thorough recycling.

The angle $\alpha$, if it is 25° or greater and less than 30°, is more effective for improving drop impact resistance.

Also, the angle $\alpha$, if it is 40° or greater and 45° or less, is less likely to sacrifice self-supporting properties and is effective for improving drop impact resistance.

When an elastic modulus of a sealant used for the laminates of the body portions is represented by A, and an elastic modulus of a sealant used for the laminate forming the bottom tape is represented by B, if the following relationship is established:

$$B < 600 \text{ MPa},$$

the sealant can have high flexibility, and can contain a large amount of rubber components having a shock absorption function.

When the front and rear opening width of the bottom surface of the self-supporting packaging bag is represented by W, and the distance from the base of each of the body portions to the mountain fold is represented by L, if the following relationship is established:

$$0.4 \leq W/2L \leq 0.8,$$

drop impact resistance can be effectively improved. Specifically, as the opening width is smaller relative to the height of the bottom, the load on the bottom is reduced accordingly when the packaging bag falls, thereby improving drop impact resistance.

The body constituted of the front and rear body portions includes joints directly connecting these body portions at the respective cutouts provided to both sides of the bottom tape. Each joint is provided between a base of each body portion and the horizontal ridge of the mountain fold, and if the ratio of the area S2 of the joint to the area S1 of the region extending a distance of 10 mm from an edge of each of the body portions in the orthogonal direction satisfies the following relationship:

$$0.35 \leq S2/S1 \leq 0.6,$$

drop impact resistance can be effectively improved.

Specifically, in general, if packaging bags contact the ground at their bottoms, the joints are likely to trigger breakage. However, if the area ratio of the joints is in the specified range, the joints are less likely to break, and the state of maintaining self-supporting properties of the seal portions of the bottom can be retained, which is effective for mitigating the impact applied to the bottom.

If the area ratio exceeds the specified range, the area of the joints may become excessively large relative to the area of the film of the bottom, making it difficult to produce a packaging bag. If the area ratio is below the specified range, the joints may be easily broken due to drop impact, and drop impact resistance is difficult to improve.

The laminates each forming the front body portion, the rear body portion, and the bottom of the packaging bag further include respective gas barrier layers, and thus the contents can be prevented from alteration and deterioration due to environmental effects, thereby improving shelf life. Furthermore, ingredients and odor of the contents can be prevented from leaking to the outside of the packaging bag.

The packaging bag can be used in applications where heat treatment is performed at a temperature of 80°C or higher. Thus, for example, the contents can be heated in a hot water bath or heated in a microwave oven.

[Brief Description of the Drawings]

Fig. 1 is a schematic front view illustrating a first embodiment of a standing pouch according to the present disclosure.
Fig. 2 is a schematic cross-sectional view illustrating a configuration of the standing pouch shown in Fig. 1.
Fig. 3 is a schematic perspective view illustrating two body portions and a bottom tape configuring the standing pouch shown in Fig. 1.
Fig. 4 is a cross-sectional view illustrating the standing pouch shown in Fig. 1, taken along the widthwise center thereof.
Fig. 5 is a schematic cross-sectional view illustrating a packaging material configuring the standing pouch show in Fig. 1.
Fig. 6 is a schematic front view illustrating a second embodiment of a standing pouch according to the present disclosure.
Fig. 7 is a schematic front view illustrating a third embodiment of a standing pouch according to the present disclosure.
Fig. 8 is a set of schematic diagrams each illustrating a packaging material of a standing pouch according to the present disclosure.
Fig. 9 is a schematic cross-sectional view illustrating a self-supporting packaging bag cut vertically to explain the components thereof, in a mode of a self-supporting packaging bag according to the present disclosure.
Fig. 10 is a schematic (partially perspective) diagram illustrating a mode of a self-supporting packaging bag according to the present disclosure.
Fig. 11 is a schematic (partially perspective) diagram illustrating the bottom, in particular, of another mode of a self-supporting packaging bag according to the present disclosure.
Fig. 12 is a schematic (partially perspective) diagram illustrating a self-supporting state in a mode of a self-supporting packaging bag according to the present disclosure.

[Description of the Embodiments]

(First aspect)

Embodiments of the present disclosure will be described in detail below. The present disclosure should not be limited to the following embodiments.

[Standing pouch]

<First Embodiment>

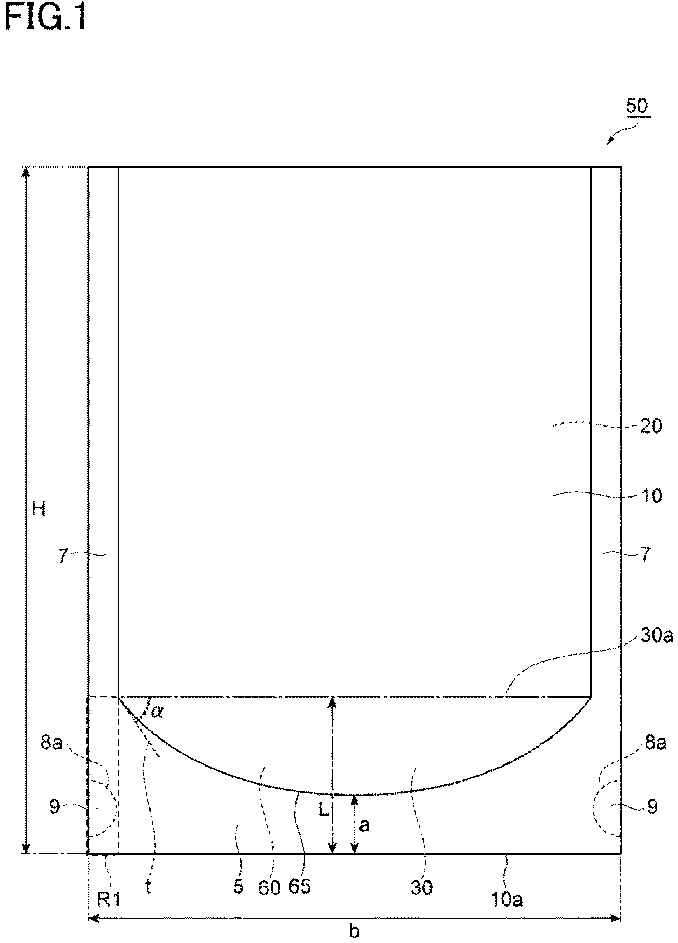

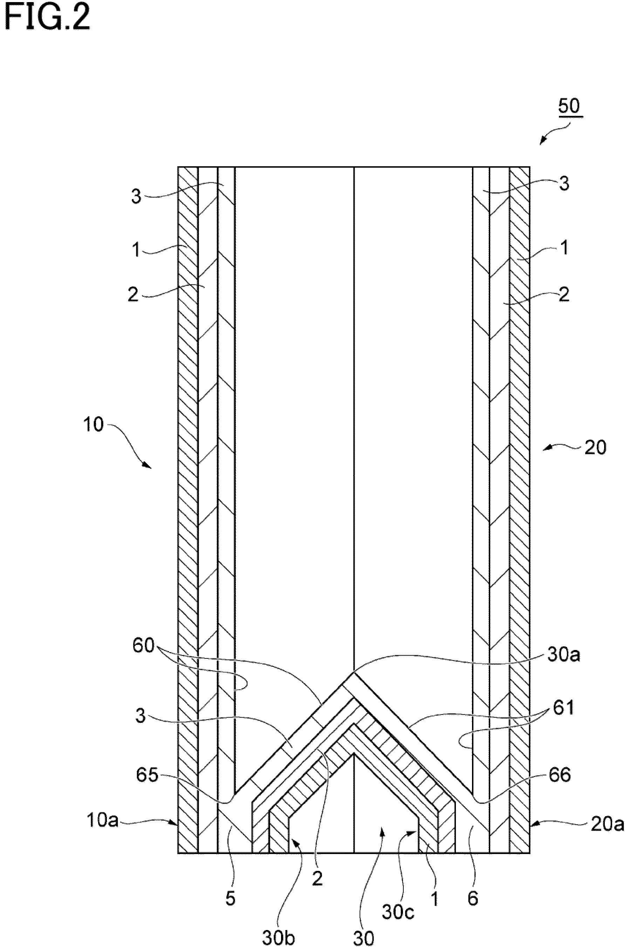

Fig. 1 is a schematic front view illustrating a standing pouch (self-supporting packaging bag) according to the present embodiment. Fig. 2 is a schematic cross-sectional view illustrating a configuration of the standing pouch according to the present embodiment. A standing pouch 50 shown in these figures is formed by heat-sealing two body portions 10 and 20 to a bottom tape 30. The two body portions 10 and 20, and the bottom tape 30 are each formed of a packaging material including a substrate layer 1, a gas barrier layer 2, and a sealant layer 3 in this order. Forming a standing pouch by heat-sealing can be performed similarly to the methods of the conventional art.

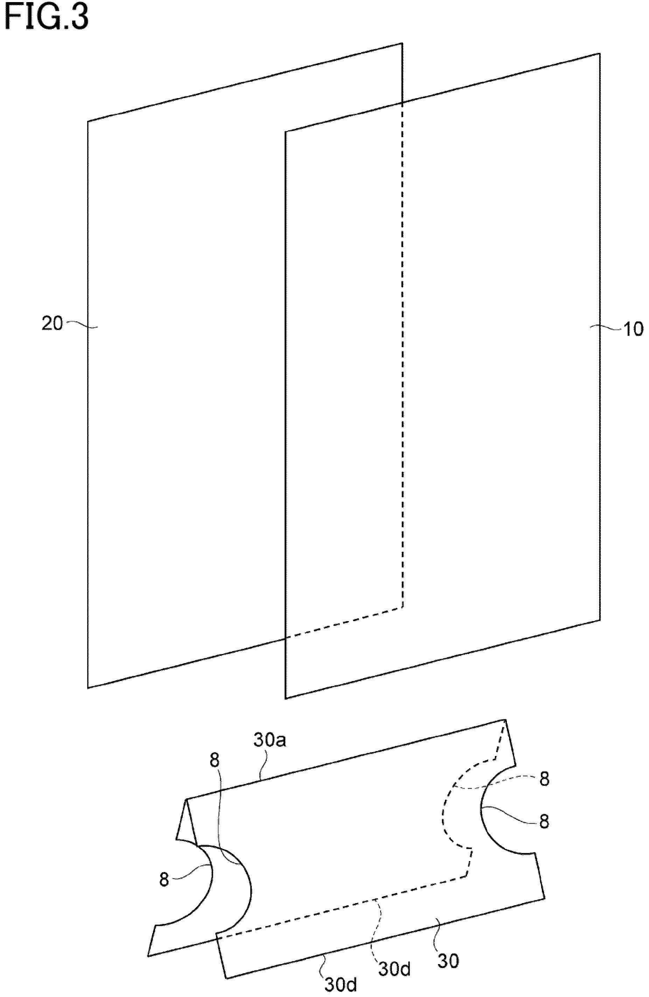

The bottom tape 30 has one mountain fold 30a. Specifically, in a self-supporting state of the standing pouch 50, the bottom tape 30 is arranged in an inverted V shape (see Figs. 2 and 3). As shown in Fig. 2, the standing pouch 50 includes a bottom constituted of a bottom seal portion 5 and a bottom seal portion 6. The bottom seal portion 5 is a portion where a bottom portion 10a of the body portion 10 is heat-sealed to one bottom portion 30b of the bottom tape 30. The bottom seal portion 6 is a portion where a bottom portion 20a of the body portion 20 is heat-sealed to another bottom portion 30c of the bottom tape 30.

A ratio a/L of a minimum width a of each of the bottom seal portions 5 and 6 to a distance L from the bases of the body portions to the mountain fold 30a is 0.15 or greater and 0.50 or less. When the ratio a/L is in this range, the standing pouch 50 is less likely to land on the bottom when it falls, the impact on the bottom due to deformation of the contents can be mitigated, and self-supporting properties tend to be good. The ratio a/L is preferred to be 0.20 or greater, and more preferred to be 0.30 or greater to have further improved drop impact resistance. The ratio a/L is preferred to be 0.45 or less, and more preferred to be 0.40 or less to have further improved self-supporting properties.

The standing pouch 50 has sides each formed of a side seal portion 7. The side seal portion 7 may have a width, for example, of 3 mm or greater and 18 mm or less, and more preferably 5 mm or greater and 15 mm or less. If the width of the side seal portion 7 is 3 mm or greater, sufficient sealing strength tends to be achieved, and if the width is 18 mm or less, a sufficient amount of contents tends to be ensured for the standing pouch 50.

A bottom seal line 65 is a boundary between the bottom seal portion 5 and unsealed portions 60, and a bottom seal line 66 is a boundary between the bottom seal portion 6 and unsealed portions 61. The bottom seal lines 65 and 66 are curved. An angle $\alpha$ formed at a point where the mountain fold 30a intersects each of the bottom seal lines 65 and 66 is 20° or greater and 45° or less. If the angle $\alpha$ is in this range, the standing pouch 50 tends to have good drop impact resistance and good self-supporting properties. The angle $\alpha$ is preferred to be 25° or greater and less than 30°, or 40° or greater and 45° or less, but 25° or greater and less than 30° is more preferred because drop impact resistance and self-supporting properties tend to be further improved with this range. The angle $\alpha$ is specified to be an angle formed between the mountain fold 30a and a tangent line t to each of the bottom seal lines 65 and 66, at a point where the mountain fold 30a intersects each of the bottom seal lines 65 and 66.

As shown in Fig. 1, the standing pouch 50 has one semicircular joint 9 on each of both sides of the bottom. Each joint 9 joins the body portions 10 and 20 together. Each joint 9 is where the sealant layers 3 of the body portions 10 and 20 are locally adhered to each other through cutouts 8 formed in the bottom tape 30. As shown in Fig. 3, each cutout 8 of the bottom tape 30 is provided to a region between the mountain fold 30a and each of bases 30d and 30d, that is, a region on each side of the bottom tape 30.

The standing pouch 50 may satisfy conditions expressed by the following Inequality (1).

$$0.4 \leq W/2L \leq 0.8 \ ... \ (1)$$

[In the inequality, W indicates an opening width of the standing pouch 50, and L indicates a distance from the base of each body portion to the mountain fold.]

If W/2L is 0.4 or greater, the standing pouch 50 can be filled with a sufficient amount of contents and tends to have good self-supporting properties. If W/2L is 0.8 or less, the standing pouch 50 will have a reduced load at the bottom when falls and tends to have even more improved drop impact resistance. W/2L is preferred to be 0.45 or greater, and more preferred to be 0.50 or greater, while it is preferred to be 0.75 or less, and even more preferred to be 0.70 or less.

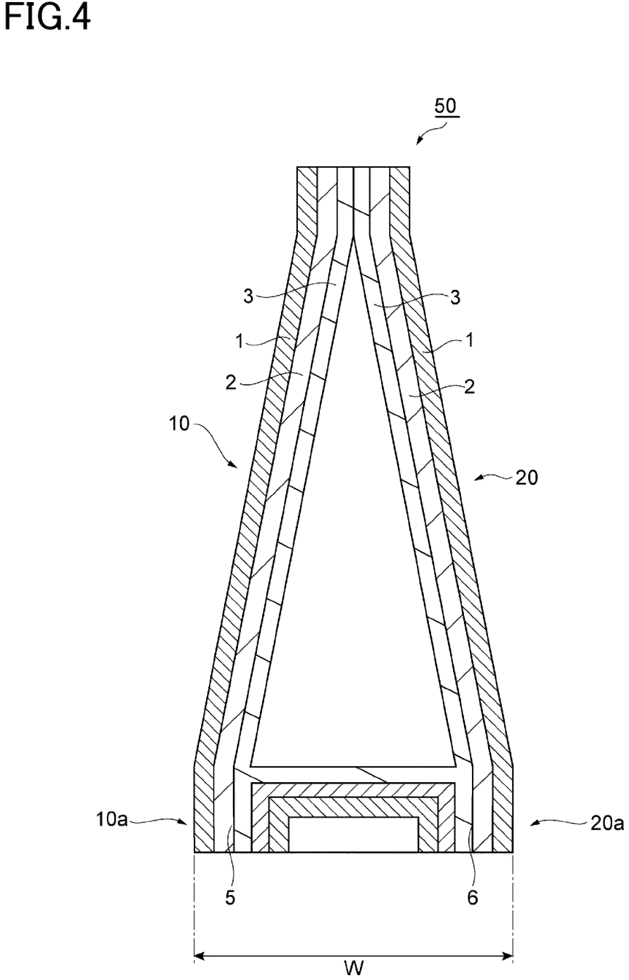

Fig. 4 is a cross-sectional view illustrating the standing pouch, taken along the widthwise center thereof. In the standing pouch shown in Fig. 4, the upper part is heat-sealed. The opening width W of the standing pouch 50 is measured using the following method. Specifically, 35 to 40 vol% of water is accommodated in the standing pouch 50 relative to the capacity thereof, and the upper part of the standing pouch 50 is heat-sealed. The standing pouch 50, with the bottom thereof facing downward, is placed on a flat surface, and a distance from the outermost layer of the packaging material forming the body portion 10 to the outermost layer of the packaging material forming the body portion 20 is measured. The measured distance is used as the opening width W.

In the standing pouch 50, a ratio S2/S1 of an area S2 of each joint 9 to an area S1 of a region R1 is preferred to be 0.35 or greater and 0.60 or less. If the ratio S2/S1 is 0.35 or greater, the joints 9 are less likely to break even when the standing pouch falls. Consequently, the body portions 10 and 20 function to mitigate the impact applied to the bottom, so that the standing pouch 50 tends to have further improved drop impact resistance. If the ratio S2/S1 is 0.60 or less, the standing pouch 50 tends to have good self-supporting properties. The ratio S2/S1 is more preferred to be 0.37 or greater, while it is more preferred to be 0.55 or less, and even more preferred to be 0.50 or less. As shown in Fig. 1, the region R1 is located between the base of each body portion and the mountain fold 30a and extends a distance of 10 mm from the side of each body portion in the orthogonal direction.

Examples of contents contained in the standing pouch 50 include liquids such as soups, solids such as side dishes, or solid-liquid mixtures of liquids and solids such as curry. The standing pouch 50 can be suitably used in applications where heat treatment is performed at a temperature of 80°C or higher, or applications where retort (high retort) sterilization treatment is performed at a temperature of 125°C or higher.

(Packaging material)

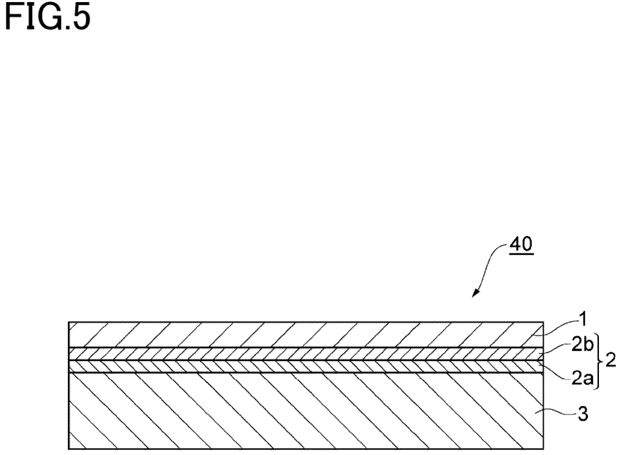

Fig. 5 is a schematic cross-sectional view illustrating a layer configuration of a packaging material applied to the body portions 10 and 20, and the bottom tape 30. A packaging material 40 shown in this figure includes a substrate layer 1, a gas barrier layer 2, and a sealant layer 3 in this order. The gas barrier layer 2 is constituted of a film substrate 2a and a deposited layer 2b.

From the perspective of recyclability, the substrate layer 1, film substrate 2a, and sealant layer 3 are each made of a polyolefin resin (e.g., polyethylene resin or polypropylene resin). Examples of the polyethylene resin include low density polyethylenes (LDPEs), straight-chain low density polyethylenes (LLDPEs), and high density polyethylenes (HDPEs). Examples of the polypropylene resin include homopolypropylenes, block polypropylenes, random polypropylenes, and modified polypropylenes. Unstretched polypropylenes (CPPs) and stretched polypropylenes (OPPs) may also be included. The polyethylene resins and polypropylene resins may be used singly or in combination of two or more. The compositions of the substrate layer 1, film substrate 2a, and sealant layer 3 may be the same or different from each other. The substrate layer 1, film substrate 2a, and sealant layer 3 may each be constituted of a single layer, or may be constituted of multiple layers.

From the perspective of recyclability, the content of the polyolefin resin is preferred to be 90 mass% or more, more preferred to be 92 mass% or more, and even more preferred to be 95 mass% or more, relative to the total mass of the sanding pouch 50.

The deposited layer 2b is formed by depositing inorganic oxide or metal. If the standing pouch 50 includes the deposited layer 2b, a good gas barrier layer tends to be provided. The deposited layer 2b may, for example be, a silicon oxide ($SiO_x$) deposited layer, aluminum oxide ($AlO_x$) deposited layer, aluminum deposited layer, or magnesium oxide deposited layer.

The substrate layer 1 may have a thickness, for example, of 8 $\mu$m or greater and 100 $\mu$m or less, more preferably 10 $\mu$m or greater and 60 $\mu$m or less, and even more preferably 15 $\mu$m or greater and 40 $\mu$m or less.

The film substrate 2a may have a thickness, for example, of 8 $\mu$m or greater and 100 $\mu$m or less, more preferably 10 $\mu$m or greater and 60 $\mu$m or less, and even more preferably 15 $\mu$m or greater and 35 $\mu$m or less.

The thickness of the deposited layer 2b may be appropriately determined according to usage, but is preferred to be 10 nm or greater and 300 nm or less, and more preferred to be 30 nm or greater and 100 nm or less. The deposited layer 2b, when having a thickness of 10 nm or greater, can have sufficient continuity with ease, and when having a thickness of 300 nm or less, can sufficiently suppress occurrence of curling or cracking, and thus sufficient gas barrier performance and flexibility can be easily achieved.

The sealant layer 3 may have a thickness, for example, of 2 $\mu$m or greater and 150 $\mu$m or less, more preferably 10 $\mu$m or greater and 120 $\mu$m or less, and even more preferably 30 $\mu$m or greater and 100 $\mu$m or less.

The layers of the packaging material 40 can be laminated with each other using an adhesive or by performing heat treatment.

(Lamination method using adhesive)

Lamination methods using an adhesive may include various known lamination methods including dry lamination, wet lamination, and non-solvent lamination. Examples of the adhesive used in these lamination methods may include polyurethane resins each obtained by the action of a bifunctional or higher isocyanate compound on a main resin such as a polyester polyol, polyether polyol, acrylic polyol, and carbonate polyol. These polyols mentioned above may be used singly or in combination of two or more.

(Lamination method using heat treatment)

Lamination methods using heat treatment may be roughly categorized into the following methods.

(1) Methods in which an adhesive resin is extruded and laminated between layers.
(2) Methods in which the laminate obtained from the method of (1) is heated and pressurized using a hot roll.
(3) Methods in which the laminate substrate obtained from the method of (1) is left standing under high temperature atmosphere, or passed through a drying and baking furnace under high temperature atmosphere.

The adhesive resin used in a lamination method using heat treatment may be an acid-modified polyolefin, etc.
An adhesive primer (anchor coat) can be provided between layers, and examples of the material of which include polyesters, polyurethanes, polyallylamines, polyethyleneimines, polybutadienes, ethylene-vinyl acetate copolymers, and chlorine-vinyl acetate-based materials. As necessary, various curing agents or additives that can be used as adhesives may be added to the adhesive primer.

(Effects)

The angle $\alpha$ of the standing pouch 50 is 20° or greater and 45° or less, and the ratio a/L is 0.15 or greater and 0.50 or less. Thus, the standing pouch 50 tends to have good drop impact resistance and good self-supporting properties, in spite of the fact that the substrate layer 1, film substrate 2a, and sealant layer 3 are each made of a polyolefin resin which is generally considered to be inferior in strength. Since the substrate layer 1, film substrate 2a, and sealant layer 3 are each made of a polyolefin resin, the standing pouch 50 has good recyclability.

<Second and third Embodiments>

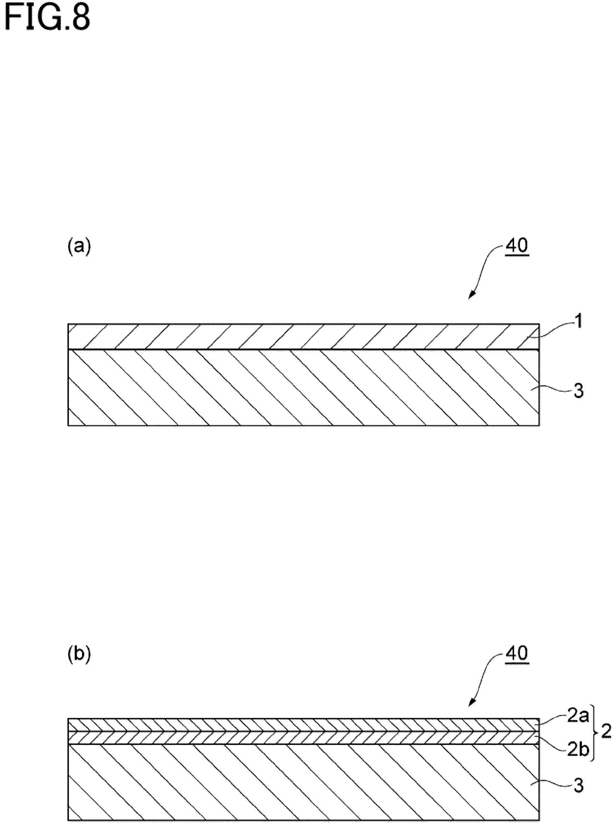

Standing pouches according to second and third embodiments will be described below. As long as no inconsistencies arise, components that are not explained in the following description are similar to those of the first embodiment.

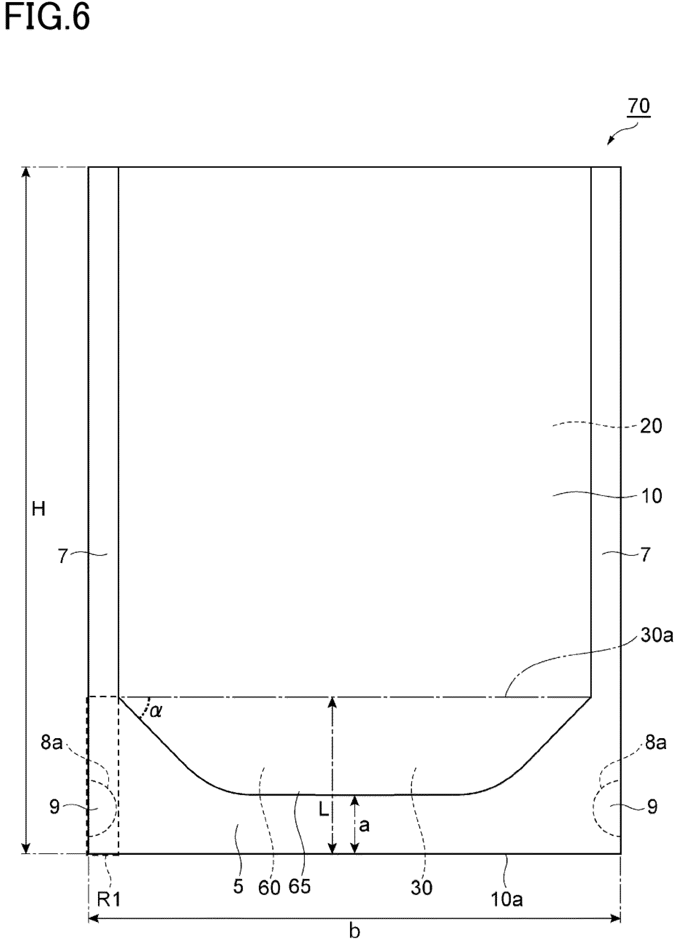

Fig. 6 is a schematic front view illustrating a standing pouch 70 according to a second embodiment. The standing pouch 70 has bottom seal lines 65 and 66 with shapes different from those of the standing pouch 50. In the standing pouch 70, each of the bottom seal lines 65 and 66 has linear both end portions and a linear center portion, and portions connecting between both end portions and the center portion are curved.

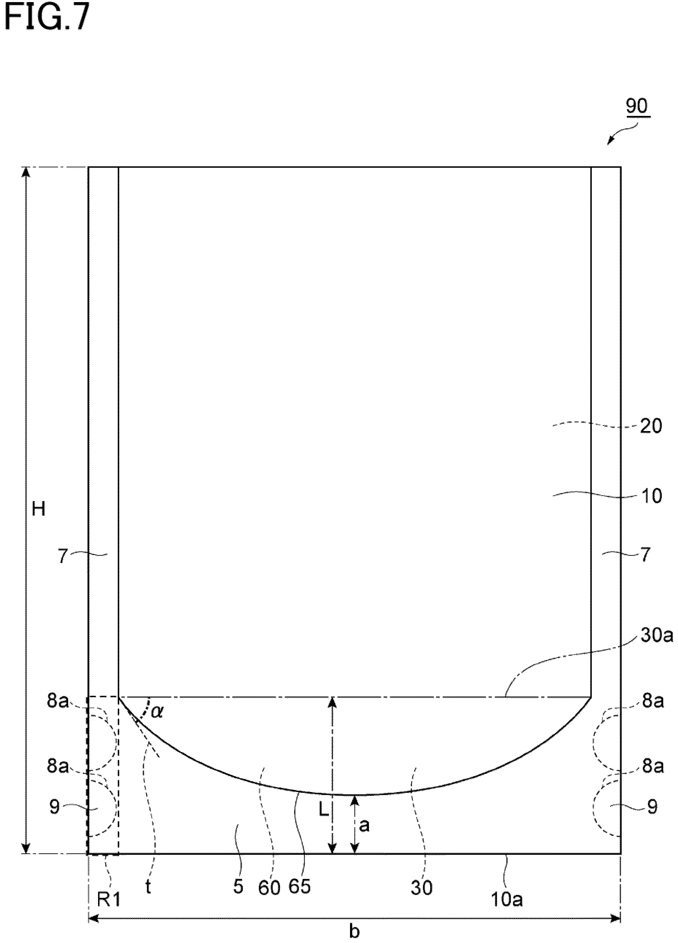

Fig. 7 is a schematic front view illustrating a standing pouch 90 according to a third embodiment. The standing pouch 90 has two semicircular joints 9 on each of both sides of the bottom.
The standing pouches according to the first to third embodiments have been described so far; however, the standing pouch according to the present disclosure should not be limited to the above embodiments. For example, the substrate layer 1, film substrate 2a, and sealant layer 3 may each contain a polyester resin. In this case, the content of the polyester resin is preferred to be 90 mass% or more, more preferred to be 92 mass% or more, and even more preferred to be 95 mass% or more, relative to the total mass of the sanding pouch.
The order of laminating the film substrate 2a and deposited layer 2b may be changed. The packaging material constituting the standing pouch does not have to include the gas barrier layer 2 (see Fig. 8(a)). In this case, the thickness of the substrate layer 1 may, for example, be 10 $\mu$m or greater and 120 $\mu$m or less, more preferably 10 $\mu$m or greater and 100 $\mu$m or less, and even more preferably 15 $\mu$m or greater and 80 $\mu$m or less. The thickness of the sealant layer 3 may, for example, be 15 $\mu$m or greater and 120 $\mu$m or less, more preferably 30 $\mu$m or greater and 100 $\mu$m or less, and eve more preferably 40 $\mu$m or greater and 80 $\mu$m or less.
In the packaging material constituting the standing pouch, if the film substrate 2a constituting the gas barrier layer 2 functions as a substrate layer, the substrate layer 1 may be omitted (see Fig. 8(b)). In this case, the packaging material may include a film substrate 2a, a deposited layer 2b, and a sealant layer 3 in this order. In this case, the thickness of the film substrate 2a may, for example, be 10 $\mu$m or greater and 120 $\mu$m or less, more preferably 10 $\mu$m or greater and 100 $\mu$m or less, and even more preferably 15 $\mu$m or greater and 80 $\mu$m or less. The thickness of the sealant layer 3 may, for example, be 10 $\mu$m or greater and 120 $\mu$m or less, more preferably 10 $\mu$m or greater and 100 $\mu$m or less, and even more preferably 15 $\mu$m or greater and 80 $\mu$m or less.
The packaging material constituting the standing pouch may include a metal layer (metal foil) in place of or in addition to the inorganic oxide deposited layer. Various metal foils such as an aluminum foil and a stainless steel foil can be used as the metal foil layer, among which, an aluminum foil is preferred from the perspective of humidity resistance, processability such as ductility, cost, etc. As the aluminum foil, a generally-used soft aluminum foil can be used. Among others, an iron-containing aluminum foil is preferred in that it has good pinhole resistance and has good ductility during forming. If a metal layer is provided, the thickness thereof may be 7 $\mu$m to 50 $\mu$m, and more preferably 9 $\mu$m to 15 $\mu$m, from

the perspective of barrier properties, pinhole resistance, processability, etc.

The packaging material constituting the standing pouch may include a printed layer. The printed layer may be provided between the substrate layer 1 and the gas barrier layer 2, or between the gas barrier layer 2 and the sealant layer 3. If a printed layer is provided, it is preferred that the printing ink does not contain chlorine, from the perspective of preventing coloring of the printed layer when re-melted or preventing odors. From the perspective of environmental considerations, biomass materials are preferred to be used for the compound contained in the printing ink.

(Second aspect)

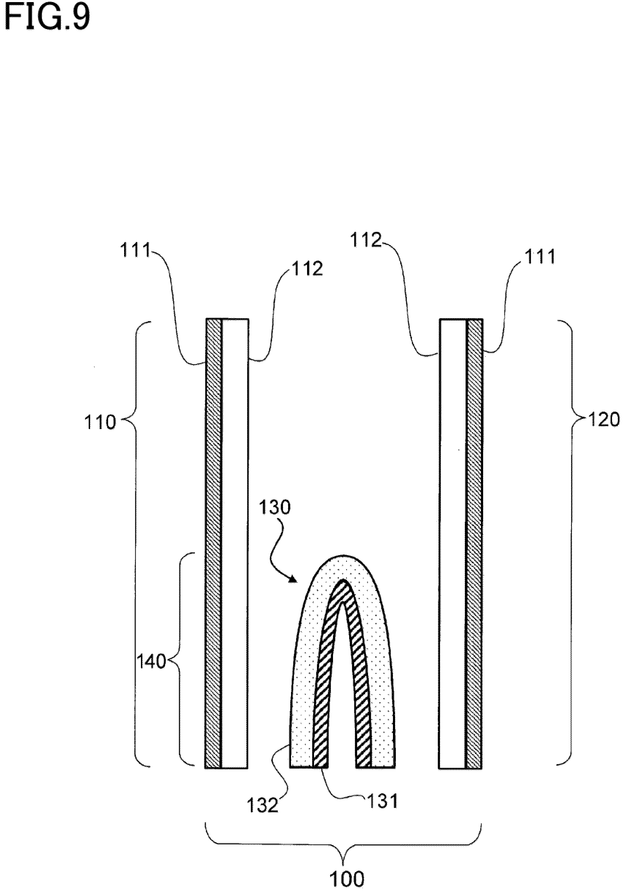

Referring to Figs. 9 to 12, the present disclosure will be described in more detail. However, the present disclosure should not be limited only to the examples shown herein.

Fig. 9 is a schematic cross-sectional view illustrating a self-supporting packaging bag cut vertically to explain the components thereof, in a mode of a self-supporting packaging bag according to the present disclosure.

A self-supporting packaging bag 100 according to the present disclosure is formed of a laminate including a sealant layer with a plastic film as a substrate. The schematic cross-sectional view shown in Fig. 9 is a view taken by vertically cutting the body of the self-supporting packaging bag 100 at the center.

However, the schematic cross-sectional view shown in Fig. 9 is only for explaining components of the self-supporting packaging bag 100 and thus does not show seal portions used for producing the bag.

The self-supporting packaging bag 100 includes a body constituted of a front body portion 110 and a rear body portion 120, and a bottom tape 130 disposed at a bottom 140. As described above, these components are laminates each including a sealant layer with a plastic film as a substrate, and are made of similar plastic materials. These laminates may each further include a gas barrier layer.

The front and rear body portions 110 and 120, which are laminates with the same configuration, are overlapped with each other with sealant layers 112 facing each other, and with both right and left edge portions of one body portion sealed vertically to those of another body portion at respective side seal portions to form a bag. The seal portions are located on the near and far sides in the schematic cross-sectional view of Fig. 9 and cannot be seen. Plastic films (substrate layers) 111 are respectively provided to the front and rear body portions 110 and 120 such that they are located on the respective outer sides of the self-supporting packaging bag 100.

The bottom tape 130 of the bottom 140 is disposed between the front and rear body portions 110 and 120 at the lower part of the body. The bottom tape 130 is also a laminate including a sealant layer 132 with a plastic film 131 as a substrate.

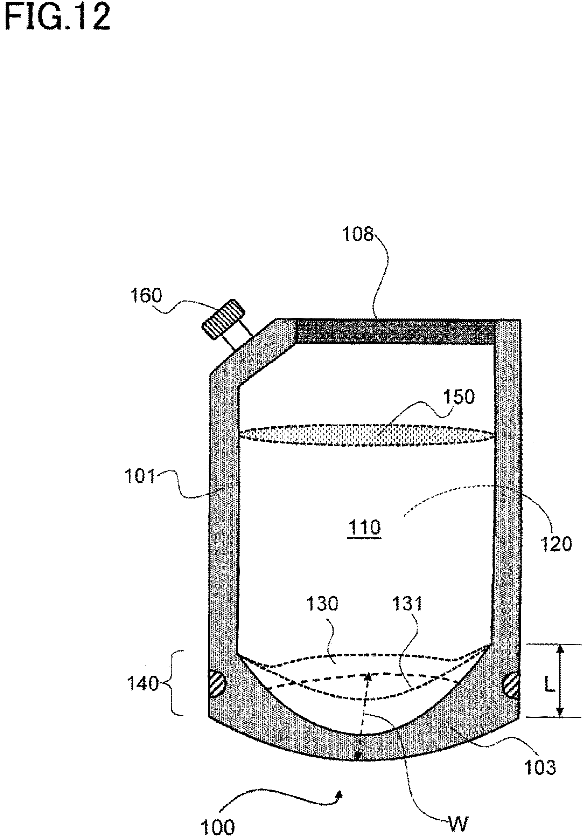

The bottom tape 130, which is mountain-folded with the sealant layer 132 of the laminate on the outside, is horizontally sandwiched between the two laminates of the body and sealed at bottom seal portions to form the bottom 140. The self-supporting packaging bag 100 is sealed at the bottom seal portions, and can be self-supporting due to the bottom surface that can be formed by expansion of the bottom tape 130. This self-supporting state will be described later referring to Fig. 12.

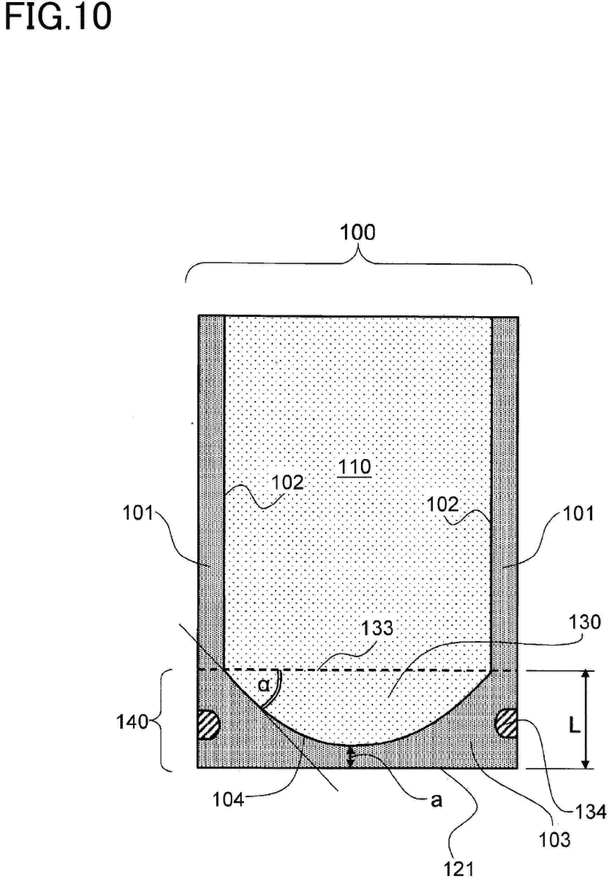

Fig. 10 is a schematic (partially perspective) diagram illustrating a mode of a self-supporting packaging bag according to the present disclosure.

The self-supporting packaging bag 100 of the present disclosure is formed by overlapping the front and rear body portions 110 and 120 of the body with each other, with the sealant layers of the laminates facing each other, and sealing both right and left edge portions of one body portion vertically to those of another body portion at respective side seal portions 101.

Each inner edge of each side seal portion 101 is a boundary with an unsealed portion, and this boundary is defined to be a side seal line 102. Contents can be stored on the inside of the side seal lines 102 and a bottom seal line 104, which will be described later.

Each side seal portion 101 may have a width, for example, of 3 mm or greater and 18 mm or less, and more preferably 5 mm or greater and 15 mm or less. The width being 3 mm or greater and 18 mm or less can achieve advantages of ensuring sufficient sealing strength and easily securing volume of contents.

The bottom tape 130, which is mountain-folded with the sealant layer 132 of the laminate on the outside, is horizontally sandwiched between the two laminates of the body and sealed at bottom seal portions 103 to form the bottom 140 at the lower part of the body.

The self-supporting packaging bag 100 is sealed at the bottom seal portions 103, and can be self-supporting due to the bottom surface that can be formed by expansion of the bottom tape 130. The initially mountain-folded bottom tape 130 can also be expanded, for example, by the weight of the contents filled in the bag.

At the bottom 140, when the mountain-folded bottom tape 130 is flat before being expanded, the inner edge, i.e., a boundary with an unsealed portion, of each bottom seal portion 103 forms a convex edge curved downward. This boundary is defined to be a bottom seal line 104.

The present inventors focused on the causes of breakage of self-supporting packaging bags and diligently studied the details thereof to provide a self-supporting packaging bag 100 capable of improving drop impact resistance, an issue aimed at in the second aspect of the present disclosure.

Specifically, when a packaging bag falls, breakage may occur due to collision with the ground surface or impact caused by the flowing contents. In this case, the most load is considered to be applied to the bottom 140, and further, a bouncing impact may also occur and apply a load to the body.

Since these loads are considered to cause cracks inside the sealant layers in particular, the present inventors focused on drop impact resistance of the sealant layers, studied to select most suitable sealant layers, while also studying shapes of the bottom seal portions 103 for improvement, and comprehensively improved drop impact resistance and achieved good results.

In the present disclosure, the ratio a/L of the minimum width a of each bottom seal portion to the distance L from the base of the body to the mountain fold of the bottom tape is in the following range:

$$0.15 \leq a/L \leq 0.50$$

While diligently studying the present disclosure, the present inventors found that the ratio a/L in this range is effective in improving drop impact resistance.

Specifically, with the ratio a/L being in this range, the bottom tape 130 is less likely to directly contact the ground when the self-supporting packaging bag 100 falls and contacts the ground, and deformation of the contents and impact on the bottom 140 due to the deformation are mitigated, thereby achieving a packaging bag having good self-supporting properties.

From the perspective of drop impact resistance, the ratio a/L is preferred to be 0.2 or greater, and more preferred to be 0.3 or greater. When self-supporting properties are considered, the ratio a/L is preferred to be 0.45 or less, and more preferred to be 0.40 or less.

In the present disclosure, at the intersection between each side seal line 102 and the convex bottom seal line 104 curved downward, when the angle between the bottom seal line 104 and the horizontal ridge (mountain fold) 133 of the mountain-folded bottom tape 130 is represented by $\alpha$, the angle $\alpha$ is in the following range:

$$20° \leq \text{angle } \alpha \leq 45°$$

While diligently studying the present disclosure, the present inventors found that the angle $\alpha$ in this range is effective in improving drop impact resistance.

It should be noted that the angle $\alpha$ is specified to be an angle formed between the horizontal ridge 133 of the mountain-folded bottom tape 130 and the tangent line to the bottom seal line 104, at a point where the ridge 133 intersects the bottom seal line 104.

The present inventors also found that self-supporting properties are effectively improved when $20° \leq \text{angle } \alpha \leq 45°$ is satisfied. The angle $\alpha$ is preferred to be 25° or greater and less than 30°, or more preferred to be 40° or greater and 45° or less.

Self-supporting properties not only refer to that the self-supporting packaging bag 100 can be self-supporting when placed on a horizontal surface, but also refer to that the bag is self-supporting even when placed on a surface with some inclination.

As described above, the present inventors focused on occurrence of breakage due to collision with the ground surface and fluid impact on the contents when the packaging bag falls, in association with drop impact resistance. In this case, the most load is considered to be applied to the bottom 140, and further, a bouncing impact may also occur and apply a load to the body. Since these loads are considered to cause cracks inside the sealant layers in particular, the present inventors focused on the elastic moduli of the sealant layers, and decided to choose sealant layers with low elasticity for absorption of impact.

Specifically, the present inventors found that when the elastic moduli of the sealant layer was 800 MPa or higher, impact resistance tended to be poor, and that when the elastic modulus of the sealant layer was lower in the bottom 140 than in the body, the sealant layer was more resistant to the impact immediately after contacting the ground.

Specifically, in the present disclosure, when the elastic modulus of each sealant layer 112 of the laminate constituting the body is represented by A, and the elastic modulus of the sealant layer 132 of the laminate constituting the bottom tape 130 is represented by B, the following relationships is established:

$$B < 800 \text{ MPa, and } A \geq B$$

While diligently studying the present disclosure, the present inventors found that the elastic moduli A and B satisfying these relationships are effective in improving drop impact resistance.

Furthermore, when the elastic modulus of each sealant of the laminate constituting the body is represented by A, and the elastic modulus of the sealant layer of the laminate constituting the bottom tape is represented by B, the following relationship is more preferred to be established:

$$B \leq 600 \text{ MPa}$$

In general, if the elastic modulus of a sealant layer is 600 MPa or less, it means that the sealant layer has high flexibility, such as in the case where it contains a large amount of rubber components having a shock absorption function.

In general, polyolefin resins are used as materials of sealant layers among thermoplastic resins. Specifically, examples of such polyolefin resins include ethylene resins such as low-density polyethylene resins (LDPEs), medium-density polyethylene resins (MDPEs), linear low-density polyethylene resins (LLDPEs), ethylene-vinyl acetate copolymers (EVAs), ethylene-$\alpha$-olefin copolymers, and ethylene-methacrylic acid resin copolymers; blended resins of polyethylenes and polybutenes; and polypropylene resins such as homopolypropylene resins (PPs), propylene-ethylene random copolymers, propylene-ethylene block copolymers, and propylene-$\alpha$-olefin copolymers.

In the present disclosure, the issue in the second aspect is to improve drop impact resistance in a monomaterialized self-supporting packaging bag, without changing the appearance, without using separate members or an excessive material composition for reinforcement, and without sacrificing self-supporting properties. Therefore, if polyolefin resins are used for the sealant layers, polyolefin resins may also be used for the substrate films.

From the perspective of recyclability, the content of the polyolefin resins is preferred to be 70 mass% or more, and more preferred to be 92 mass% or more, and even more preferred to be 95 mass% or more, relative to the total mass of the packaging bag.

These resins may be used singly, or may be used in different combination between layers of a laminate. Furthermore, a single layer may be formed, or a multi-layer may be formed.

A sealant layer can be formed on a laminate by forming a film by extruding a melted resin using an extruder, etc. Alternatively, a sealant layer can be formed by preparing a material into a film form in advance and laminating the film-form material on the surface of a laminate using a lamination method.

The lamination method for forming a laminate may include, for example, a lamination method using an adhesive, and a lamination method using heat treatment.

The lamination method using an adhesive may include known lamination methods including dry lamination, wet lamination, and non-solvent lamination. Examples of the adhesive used in these lamination methods may include polyurethane resins each obtained by the action of a bifunctional or higher isocyanate compound on a main resin such as a polyester polyol, polyether polyol, acrylic polyol, or carbonate polyol. These polyols can be used singly or in combination of two or more.

Lamination method using heat treatment may be roughly categorized into the following methods.

(1) Methods in which an adhesive resin is extruded and laminated between layers.
(2) Methods in which the laminate substrate obtained from the method of (1) is heated and pressurized using a roll.
(3) Methods in which the laminate substrate obtained from the method of (1) is left standing under high temperature atmosphere, or passed through a drying and baking furnace under high temperature atmosphere.

Examples of the adhesive resin used in the lamination methods using heat treatment include acid-modified polyolefins, etc.

An adhesive primer (anchor coat) can be provided between layers, and examples of the material of which include polyesters, polyurethanes, polyallylamines, polyethyleneimines, polybutadienes, ethylene-vinyl acetate copolymers, and chlorine-vinyl acetate-based materials. As necessary, various curing agents or additives that can be used as adhesives may be added to the adhesive primer.

In the present disclosure, a cutout can be provided to each of both sides of the bottom tape 130. The cutout may also be referred to as a punch hole, depending on the forming method. In this case, the body constituted of the front and rear body portions 110 and 120 includes joints 134 directly connecting these body portions at the respective cutouts. Each joint 134 is provided between a base 121 of the body and the horizontal ridge 133 of the mountain fold, and the ratio of the area S2 of the joint 134 to the area S1 of the region extending a distance of 10 mm from an edge of each of the body portions in the orthogonal direction can be in the following relationship:

$$0.35 \leq S2/S1 \leq 0.6$$

The present inventors found that satisfying this relationship could contribute to improving drop impact resistance, the reasons for which are provided below.

When the packaging bag falls and contacts the ground on the bottom 140, the impact can be absorbed and mitigated by breakage of the joints 134.

By specifying the range of the area ratio of each joint 134, self-supporting properties of the packaging bag can be retained and the impact on the bottom 140 is mitigated. If the position of each joint 134 is above the upper limit, it may be difficult to produce a packaging bag, and if it is below the lower limit, the joints 134 may be easily broken and improvement in drop impact resistance may be difficult to achieve.

As described above, the laminates forming the front and rear body portions 110 and 120, and the bottom tape 130 of the bottom of the self-supporting packaging bag 100 of the present disclosure can further include respective gas barrier layers.

Specifically, by each laminate including a gas barrier, the contents can be prevented from alteration and deterioration due to environmental effects to thereby improve shelf life. Furthermore, ingredients, odor, etc. of the contents can be prevented from leaking to the outside of the packaging bag.

A metal foil, e.g., aluminum foil, which may be effective as a gas barrier layer, is an opaque layer and is not suitable when transparency is required. Applications where the use of metals is inappropriate should be avoided. Materials may be used appropriately depending on the purpose and required quality.

For example, metal gas barrier layers are not suitable for cooking in a microwave oven due to sparks caused by high frequency radio waves. In contrast, gas barrier films whose surfaces are provided with inorganic compound layers can be used.

Plastic films used for such a gas barrier film are films comprising a polymer resin composition, the material of which is appropriately selected according to usage from, for example, polyolefins (polyethylene, polypropylene, etc.), polyesters (polyethylene terephthalate, polybutylene terephthalate, polyethylene naphthalate, etc.), polyamides (nylon-6, nylon-66, etc.), polyimides, and the like. In particular, from the perspective of film strength, cost, and monomaterial use, polypropylenes are preferred to be used as a plastic film substrate.

In the case of using a gas barrier film, the gas barrier layer can be constituted of an inorganic compound deposited layer and a coating layer. After providing an anchor coat on a plastic film, a deposited layer and a coating layer can be sequentially provided.

For example, urethane acrylate can be used for the anchor coat layer of the gas barrier film. The method used for forming the anchor coat layer may be a coating method which applies a printing method such as gravure coating that uses a coating material obtained by dissolving a resin in a solvent, but a generally known coating method can also be used for forming a coating film.

The method of forming the deposited layer may be a vacuum deposition method in which an inorganic compound such as SiO or AlO is coated by vapor deposition on a plastic film provided with an anchor coat layer to thereby form an inorganic compound layer. The thickness of the deposited layer is preferred to be 15 nm to 30 nm.

The method of forming the coating layer may be a method in which a coating agent that is an aqueous solution or a water/alcohol mixed aqueous solution containing, as a base resin, at least one of a water-soluble polymer, one or more alkoxides or their hydrolysates, or both, and tin chloride, is applied to a film, followed by heating and drying. Thus, an inorganic compound layer can be formed as a coating layer using a coating method. In this case, a silane monomer may be added to the coating agent to improve adhesion to the anchor coat layer.

Solely forming a coating film by vacuum deposition can provide the inorganic compound layer with gas barrier properties, but a coating layer that is an inorganic compound layer formed by coating can be formed over a deposited layer that is an inorganic compound layer formed by vapor deposition to thereby provide a gas barrier layer.

By combining these two layers, a reaction layer may be produced at the interface between the inorganic compound layer formed by vacuum deposition and the inorganic compound layer formed by coating, or a dense structure may be formed by the inorganic compound layer formed by coating filling or reinforcing defects or micropores, such as pinholes, cracks, and grain boundaries, caused in the inorganic compound layer formed by vacuum vapor deposition.

Therefore, higher gas barrier properties, moisture resistance, and water resistance can be achieved as a gas barrier film, while being imparted with suitability as a packaging material due to having flexibility that can endure deformation caused by external forces.

For example, if SiOx is used as a gas barrier layer, the contents are externally visible from the packaging bag due to the coating film having transparency. In the gas barrier film, the gas barrier layer can be laminated outside or inside the packaging bag.

As necessary, a printed layer may be provided in a layer in the laminate with a plastic film as a substrate, visible from outside the packaging bag, for the purpose of improving the image of the product, displaying necessary information about the contents, and improving aesthetic properties. The printed layer may be provided as an outermost layer of the packaging bag.

The printed layer may be provided to part of the packaging bag, or may be provided over the entire surface of the packaging bag. Alternatively, a display section may be provided without using a printed layer by, for example, adhering a seal with printed information to the surface of the packaging bag.

The printing method and the printing ink used are not particularly limited, but can be appropriately selected from known printing methods, considering printing suitability for the plastic film, aesthetic properties such as color hue, as well as adhesion, safety as food containers, and other factors.

For example, the printing method may be selected from known printing methods such as gravure printing, offset printing, gravure offset printing, flexographic printing, and inkjet printing. Of these methods, gravure printing may be preferably used from the perspective of productivity, printing suitability for the plastic film, and high definition of images.

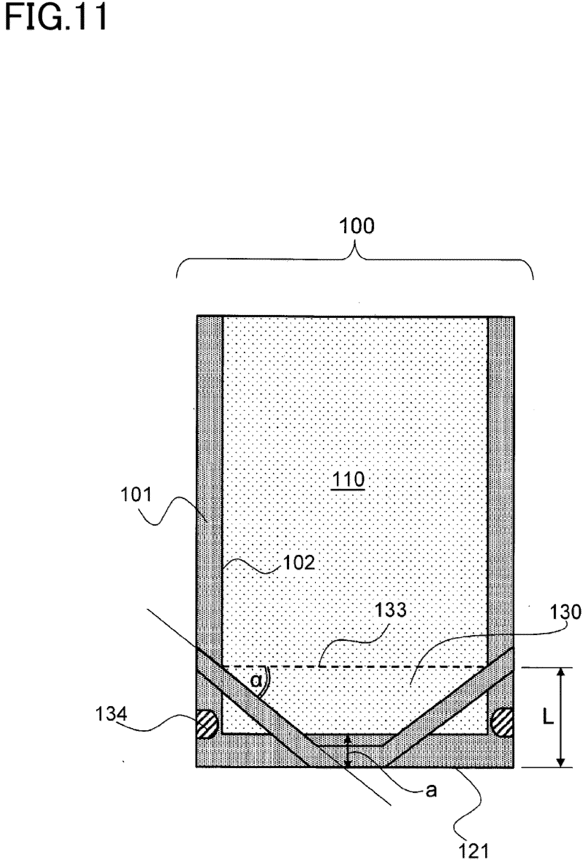

Fig. 11 is a schematic (partially perspective) diagram illustrating the bottom, in particular, of another mode of a self-supporting packaging bag according to the present disclosure.

In the bottom 104 of the self-supporting packaging bag 100 of the present disclosure, the inner edge of each bottom seal portion 103 forms a convex boundary with the unsealed portion, being curved downward. This boundary is defined to be a bottom seal line 104 which, however, does not have to have an arc shape as does the bottom seal line shown in Fig. 10. As long as the bottom seal line is a convex edge curved downward, for example, the shape of the bottom seal portion 103 may be as in the example shown in Fig. 11, with the angle being in the range specified in the present disclosure. In the example shown in Fig. 11, the distance from the base 121 of the body to the bottom seal line 104 is indicated by the arrow as a minimum width a of the bottom seal portion.

Fig. 12 is a schematic (partially perspective) diagram illustrating a self-supporting state in a mode of a self-supporting packaging bag according to the present disclosure.

The example shown in Fig. 12 shows a state in which contents 150 are filled in the self-supporting packaging bag 100, and the packaging bag is self-supporting due to expansion of the bottom.

In the example shown in Fig. 12, a spout 160 for extracting the contents 150 is mounted to the upper corner of the packaging bag; however, an opening may be provided such as by tearing part of the packaging bag, without providing the spout 160, for extraction of the contents 150. The packaging bag is in the state of being sealed at top seal portions 108 after being filled with the contents 150.

The bottom tape 130 is expanded by the weight of the contents 150 of the packaging bag, forming a boat-shaped bottom. In this case, a front and rear opening width W of the bottom is indicated by the broken arrow in Fig. 12.

In the self-supporting packaging bag 100, when the front and rear opening width of the bottom is represented by W, and the distance from the base 121 of the body to the horizontal ridge 131 of the mountain fold of the bottom tape is represented by a bottom height L, the following relationship can be established:

$$0.4 \leq W/2L \leq 0.8$$

If W/2L is in this range, the impact on the bottom 140 is reduced when the bag falls, improving drop impact resistance.

If the upper limit is exceeded, or if the angle $\alpha$ is 35° or greater, in particular, the impact on the bottom 140 increases, only showing poor drop impact resistance. If less than the lower limit, the opening width of the bottom 140 is reduced, deteriorating self-supporting properties and decreasing the amount of content.

The self-supporting packaging bag 100 of the present disclosure can be used, for example, as a packaging bag for food. For example, it can be used for liquid products such as soups, solid products such as vegetables, or solid-liquid mixtures of liquid and solid products such as curry. These types of food can be cooked by undergoing heat treatment at 80°C or higher. The packaging bag can be suitably used in applications where retort sterilization treatment is performed at a temperature of 125°C or higher.

Thus, the present disclosure can provide a monomaterialized self-supporting packaging bag that can improve drop impact resistance without changing the appearance, without using separate members or an excessive material composition for reinforcement, and without sacrificing self-supporting properties.

Examples

In the following, the present disclosure will be described in more detail through examples; however, the present disclosure should not be limited to the following examples.

[Preparation of standing pouches related to first aspect]

<Examples 1-1 to 1-14 and Comparative Examples 1-1 and 1-2>

A packaging material for constituting a standing pouch was prepared. The packaging material had a layer configuration as follows.

Packaging material: Packaging material including a substrate layer (OPP film; Thickness: 20 $\mu$m, manufactured by Futamura Chemical Co., Ltd.; Product name: FOR), a gas barrier layer (Constituted of film substrate and deposited layer; Material of film substrate: Polypropylene resin), and a sealant layer (CPP film; Thickness: 60 μm, manufactured by Toray Industries, Inc.; Product name: ZK 207) in this order.

In the packaging material, the deposited layer was in contact with the substrate layer, and the film substrate was in contact with the sealant layer.

Standing pouches were prepared using laminates. Table 1 shows the angle α formed at a point where the mountain fold and the bottom seal line of the standing pouch intersect, minimum width a of the bottom seal portion, distance L, lateral length b of the standing pouch, and opening width W. The height of the standing pouch and the width of the side seal portion were 180 mm and 5 mm, respectively. Joint(s) were provided to respective sides of the standing pouch. Each joint had a semicircular shape (radius: shown in Table 1). Each side of the standing pouch was provided with the number of joints shown in Table 1. Table 1 also shows the ratio a/L of the minimum width a of the bottom seal portion to the distance L, the ratio W/2L of the opening width W to the value obtained by multiplying the distance L by 2, and the ratio S2/S1 of the area S2 to the area S1.

[Evaluation of drop impact resistance]

As contents, 250 mL of water was filled in the standing pouch of each of the examples and comparative examples, and the top of the standing pouch was heat-sealed. At an ambient temperature (23°C), the standing pouch was dropped vertically from a height of 1 m with the bottom tape facing down, and the number of drops was counted until the standing pouch was broken. 10 samples were evaluated under the same conditions according to the following evaluation criteria. The results are shown in Table 1.

(Evaluation criteria)

A: The number of samples dropped more than 10 times before occurrence of breakage was 10.

B: The number of samples dropped more than 10 times before occurrence of breakage was 6 or more and 9 or less.

C: The number of samples dropped more than 10 times before occurrence of breakage was 1 or more and 5 or less.

D: The number of samples dropped more than 10 times before occurrence of breakage was 0.

[Evaluation for self-supporting properties]

As contents, 250 ml of water was filled in the standing pouch of each of the examples and comparative examples, and the top of the standing pouch was heat-sealed. Self-supporting properties of each heat-sealed standing pouch were evaluated according to the following evaluation criteria. The results are shown in Table 1.

A: The standing pouch could keep standing even when placed on a table tilted at 10°.
B: The standing pouch could keep standing on a flat surface, but tipped over when placed on a table tilted at 10°.
C: The standing pouch could not keep standing even when placed on a flat surface.

[Table 1]

| | Dimensions of standing pouch | | | | | Joints | | Parameters | | | Drop impact resistance | | Self-supporting properties |
| --- | --- | --- | --- | --- | --- | --- | --- | --- | --- | --- | --- | --- | --- |
| | α [°] | a [mm] | L [mm] | b [mm] | W [mm] | Radius [mm] | Number | a/L | W/2L | S2/S1 | No breakage | Evaluation | Evaluation |
| Ex. 1-1 | 45 | 6 | 40 | 140 | 66 | 7.5 | 1 | 0.15 | 0.83 | 0.221 | 3 | C | A |
| Ex. 1-2 | 35 | 6 | 40 | 140 | 70 | 7.5 | 1 | 0.15 | 0.88 | 0.221 | 5 | C | A |
| Ex. 1-3 | 25 | 6 | 31 | 140 | 51 | 7.5 | 1 | 0.19 | 0.82 | 0.221 | 10 | A | A |
| Ex. 1-4 | 25 | 6 | 36 | 140 | 53 | 7.5 | 1 | 0.17 | 0.74 | 0.221 | 10 | A | A |
| Ex. 1-5 | 25 | 20 | 35 | 140 | 43 | 7.5 | 1 | 0.57 | 0.61 | 0.221 | 10 | A | B |
| Ex. 1-6 | 45 | 10 | 40 | 140 | 60 | 7.5 | 1 | 0.25 | 0.75 | 0.221 | 8 | B | A |
| Ex. 1-7 | 45 | 15 | 40 | 140 | 52 | 7.5 | 1 | 0.38 | 0.65 | 0.221 | 10 | A | A |
| Ex. 1-8 | 35 | 10 | 40 | 140 | 63 | 7.5 | 1 | 0.25 | 0.79 | 0.221 | 5 | C | A |
| Ex. 1-9 | 35 | 15 | 40 | 140 | 52 | 7.5 | 1 | 0.38 | 0.65 | 0.221 | 8 | B | A |
| Ex. 1-10 | 25 | 15 | 40 | 140 | 45 | 7.5 | 1 | 0.38 | 0.56 | 0.221 | 10 | A | B |
| Ex. 1-11 | 25 | 15 | 40 | 140 | 50 | 6 | 2 | 0.38 | 0.63 | 0.365 | 10 | A | A |
| Ex. 1-12 | 25 | 15 | 40 | 140 | 50 | 7.5 | 2 | 0.38 | 0.63 | 0.442 | 10 | A | A |
| Ex. 1-13 | 25 | 15 | 35 | 140 | 45 | 7.5 | 2 | 0.43 | 0.64 | 0.589 | 10 | A | B |
| Ex. 1-14 | 25 | 20 | 50 | 140 | 43 | 7.5 | 2 | 0.40 | 0.43 | 0.589 | 10 | A | B |
| Comp. Ex. 1-1 | 55 | 6 | 40 | 140 | 68 | 7.5 | 1 | 0.15 | 0.85 | 0.221 | 0 | D | A |
| Comp. Ex. 1-2 | 18 | 6 | 28 | 140 | 31 | 7.5 | 1 | 0.21 | 0.55 | 0.221 | 0 | D | C |

[Preparation of standing pouches related to second aspect]

Self-supporting packaging bags were prepared and evaluated.

1. External dimensions of packaging bag
Lateral width: 140 mm × Height: 180 mm
2. Configuration of laminates constituting packaging bag
From outside of packaging bag:
Stretched polypropylene film 1 (Thickness 20 μm) / Stretched polypropylene film 2 (Thickness 20 μm) / Unstretched polypropylene (Sealant layer, Thickness 60 μm)
3. Material composition

Stretched polypropylene film 1: Futamura FOR
Stretched polypropylene film 2: (Gas barrier film) Stretched polypropylene film with inorganic compound deposited layer
Unstretched polypropylene:

AA'; Not disclosed (only physical properties disclosed)
B; Toray ZK207
C; Not disclosed (only physical properties disclosed)

Evaluation items and evaluation method
As measurement items, the elastic moduli of the sealant layers were measured.
As evaluation items, drop testing and self-supporting properties were evaluated.
Methods of measurement and evaluation were as follows.

(Elastic modulus)

Measurement was performed according to JIS K 7161. Data were expressed in units of MPa.

Size of test specimen: TD direction 300 mm × Width 20 mm
Number of test specimens: n=5
Measurement conditions: Distance between chucks: 250 mm, Tensile speed: 5 mm/min
Calculation method for elastic modulus: 2-point inclination (strain: 0.05% 0.25%)

(Drop testing)

As contents, 250 ml of water was filled in each prepared packaging bag for evaluation, and the top of the packaging bag was heat-sealed.
At an ambient temperature, the packaging bag was dropped vertically from a height of 1 m with the bottom tape facing down, and the number of drops was counted until the packaging bag was broken.
10 samples were evaluated under the same conditions according to the following evaluation criteria.

(Evaluation criteria)

S1: None of the 10 samples was broken by less than 10 drops (Average number of drops the bag was broken was 25 or more.)
S2: None of the 10 samples was broken by less than 10 drops (Average number of drops the bag was broken was 10 or more and less than 25.)
A: Some samples were broken by less than 10 drops (The number of samples that were not broken by less than 10 drops was 6 to 9.)
B: Some samples were broken by less than 10 drops (The number of samples that were not broken by less than 10 drops was 1 to 5.)
C: All 10 samples were broken by less than 10 drops.

(Self-supporting properties)

As contents, 250 ml of water was filled in each prepared packaging bag for evaluation, and the top of the packaging bag was heat-sealed.

The self-supporting state was observed by placing the packaging bag in a self-supporting state on a flat table and tilting the table. (The bag was tilted in the opening width direction.)

(Evaluation criteria)

A: The packaging bag could self-support on a table tilted at 10°.
B: The packaging bag could self-support when placed on a flat surface, but tipped over when placed on the table tilted at 10°.
C: The packaging bag could not self-support even when placed on a flat surface.

Configurations of Examples 2-1 to 2-22 and Comparative Examples 2-1 to 2-4 are shown below. Names and reference signs of the components correspond to those shown in the present specification and Figs. 9, 10 and 12.

<Example 2-1>

CPP (sealant layer: unstretched polypropylene) physical properties

Body: Product name: A, elastic modulus: 850 MPa
Bottom: Product name B, elastic modulus 660 MPa
Elastic modulus: Body>Bottom

Bottom shape

$\alpha$ (angle between bottom seal line and horizontal ridge of bottom tape) = 45°
a (minimum width of bottom seal portion) = 6 mm
L (bottom height) = 40 mm
Lateral width = 140 mm, Height = 180 mm
W (opening width) = 66 mm

Punch hole
Radius: 7.5 mm, number of punch holes: 1
Parameter

a/L (minimum width of bottom seal portion / bottom height) = 0.15
W/2L (opening width / bottom height) = 0.83
S2/S1 (area ratio of punch hole) = 0.22

<Example 2-2>

CPP (sealant layer: unstretched polypropylene) physical properties

Body: Product name: A, elastic modulus: 850 MPa
Bottom: Product name: C, elastic modulus: 505 MPa
Elastic modulus: Body>Bottom

Bottom shape

$\alpha$ (angle between bottom seal line and horizontal ridge of bottom tape) = 45°

a (minimum width of bottom seal portion) = 6 mm
L (bottom height) = 40 mm
Lateral width = 140 mm, Height = 180 mm
W (opening width) = 66 mm

Punch hole
Radius: 7.5 mm, number of punch holes: 1
Parameter

a/L (minimum width of bottom seal portion / bottom height) = 0.15
W/2L (opening width / bottom height) = 0.83
S2/S1 (area ratio of punch hole) = 0.22

<Example 2-3>

CPP (sealant layer: unstretched polypropylene) physical properties

Body: Product name: B, elastic modulus: 660 MPa
Bottom: Product name B, elastic modulus 660 MPa
Elastic modulus: Body=Bottom

Bottom shape

$\alpha$ (angle between bottom seal line and horizontal ridge of bottom tape) = 45°
a (minimum width of bottom seal portion) = 6 mm
L (bottom height) = 40 mm
Lateral width = 140 mm, Height = 180 mm
W (opening width) = 66 mm

Punch hole
Radius: 7.5 mm, number of punch holes: 1
Parameter

a/L (minimum width of bottom seal portion / bottom height) = 0.15
W/2L (opening width / bottom height) = 0.83
S2/S1 (area ratio of punch hole) = 0.22

<Example 2-4>

CPP (sealant layer: unstretched polypropylene) physical properties

Body: Product name: C, elastic modulus 505 MPa
Bottom: Product name: C, elastic modulus: 505 MPa
Elastic modulus: Body=Bottom

Bottom shape

$\alpha$ (angle between bottom seal line and horizontal ridge of bottom tape) = 45°
a (minimum width of bottom seal portion) = 6 mm
L (bottom height) = 40 mm
Lateral width = 140 mm, Height = 180 mm
W (opening width) = 66 mm

Punch hole

Radius: 7.5 mm, number of punch holes: 1
Parameter

a/L (minimum width of bottom seal portion / bottom height) = 0.15
W/2L (opening width / bottom height) = 0.83
S2/S1 (area ratio of punch hole) = 0.22

<Example 2-5>

CPP (sealant layer: unstretched polypropylene) physical properties

Body: Product name: A, elastic modulus: 850 MPa
Bottom: Product name B, elastic modulus 660 MPa
Elastic modulus: Body>Bottom

Bottom shape

$\alpha$ (angle between bottom seal line and horizontal ridge of bottom tape) = 45°
a (minimum width of bottom seal portion) = 10 mm
L (bottom height) = 40 mm
Lateral width = 140 mm, Height = 180 mm
W (opening width) = 60 mm

Punch hole
Radius: 7.5 mm, number of punch holes: 1
Parameter

a/L (minimum width of bottom seal portion / bottom height) = 0.25
W/2L (opening width / bottom height) = 0.75
S2/S1 (area ratio of punch hole) = 0.22

<Example 2-6>

CPP (sealant layer: unstretched polypropylene) physical properties

Body: Product name: A, elastic modulus: 850 MPa
Bottom: Product name: C, elastic modulus: 505 MPa
Elastic modulus: Body>Bottom

Bottom shape

$\alpha$ (angle between bottom seal line and horizontal ridge of bottom tape) = 45°
a (minimum width of bottom seal portion) = 10 mm
L (bottom height) = 40 mm
Lateral width = 140 mm, Height = 180 mm
W (opening width) = 60 mm

Punch hole
Radius: 7.5 mm, number of punch holes: 1
Parameter

a/L (minimum width of bottom seal portion / bottom height) = 0.25
W/2L (opening width / bottom height) = 0.75
S2/S1 (area ratio of punch hole) = 0.22

<Example 2-7>

CPP (sealant layer: unstretched polypropylene) physical properties

Body: Product name: B, elastic modulus: 660 MPa
Bottom: Product name B, elastic modulus 660 MPa
Elastic modulus: Body=Bottom

Bottom shape

$\alpha$ (angle between bottom seal line and horizontal ridge of bottom tape) = 45°
a (minimum width of bottom seal portion) = 10 mm
L (bottom height) = 40 mm
Lateral width = 140 mm, Height = 180 mm
W (opening width) = 60 mm

Punch hole
Radius: 7.5 mm, number of punch holes: 1
Parameter

a/L (minimum width of bottom seal portion / bottom height) = 0.25
W/2L (opening width / bottom height) = 0.75
S2/S1 (area ratio of punch hole) = 0.22

<Example 2-8>

CPP (sealant layer: unstretched polypropylene) physical properties

Body: Product name: A, elastic modulus: 850 MPa
Bottom: Product name B, elastic modulus 660 MPa
Elastic modulus: Body>Bottom

Bottom shape

$\alpha$ (angle between bottom seal line and horizontal ridge of bottom tape) = 45°
a (minimum width of bottom seal portion) = 15 mm
L (bottom height) = 40 mm
Lateral width = 140 mm, Height = 180 mm
W (opening width) = 52 mm

Punch hole
Radius: 7.5 mm, number of punch holes: 1
Parameter

a/L (minimum width of bottom seal portion / bottom height) = 0.38
W/2L (opening width / bottom height) = 0.65
S2/S1 (area ratio of punch hole) = 0.22

<Example 2-9>

CPP (sealant layer: unstretched polypropylene) physical properties

Body: Product name: A, elastic modulus: 850 MPa
Bottom: Product name: C, elastic modulus: 505 MPa
Elastic modulus: Body>Bottom

Bottom shape

$\alpha$ (angle between bottom seal line and horizontal ridge of bottom tape) = 45°
a (minimum width of bottom seal portion) = 15 mm
L (bottom height) = 40 mm
Lateral width = 140 mm, Height = 180 mm
W (opening width) = 52 mm

Punch hole
Radius: 7.5 mm, number of punch holes: 1
Parameter

a/L (minimum width of bottom seal portion / bottom height) = 0.38
W/2L (opening width / bottom height) = 0.65
S2/S1 (area ratio of punch hole) = 0.22

<Example 2-10>

CPP (sealant layer: unstretched polypropylene) physical properties

Body: Product name: B, elastic modulus: 660 MPa
Bottom: Product name B, elastic modulus 660 MPa
Elastic modulus: Body=Bottom

Bottom shape

$\alpha$ (angle between bottom seal line and horizontal ridge of bottom tape) = 45°
a (minimum width of bottom seal portion) = 15 mm
L (bottom height) = 40 mm
Lateral width = 140 mm, Height = 180 mm
W (opening width) = 52 mm

Punch hole
Radius: 7.5 mm, number of punch holes: 1
Parameter

a/L (minimum width of bottom seal portion / bottom height) = 0.38
W/2L (opening width / bottom height) = 0.65
S2/S1 (area ratio of punch hole) = 0.22

<Example 2-11>

CPP (sealant layer: unstretched polypropylene) physical properties

Body: Product name: C, elastic modulus 505 MPa
Bottom: Product name: C, elastic modulus: 505 MPa
Elastic modulus: Body=Bottom

Bottom shape

α (angle between bottom seal line and horizontal ridge of bottom tape) = 45°
a (minimum width of bottom seal portion) = 15 mm
L (bottom height) = 40 mm
Lateral width = 140 mm, Height = 180 mm
W (opening width) = 52 mm

Punch hole
Radius: 7.5 mm, number of punch holes: 1
Parameter
a/L (minimum width of bottom seal portion / bottom height) = 0.38

W/2L (opening width / bottom height) = 0.65
S2/S1 (area ratio of punch hole) = 0.22

<Example 2-12>

CPP (sealant layer: unstretched polypropylene) physical properties

Body: Product name: A, elastic modulus: 850 MPa
Bottom: Product name B, elastic modulus 660 MPa
Elastic modulus: Body>Bottom

Bottom shape

α (angle between bottom seal line and horizontal ridge of bottom tape) = 25°
a (minimum width of bottom seal portion) = 6 mm
L (bottom height) = 36 mm
Lateral width = 140 mm, Height = 180 mm
W (opening width) = 53 mm

Punch hole
Radius: 7.5 mm, number of punch holes: 1
Parameter

a/L (minimum width of bottom seal portion / bottom height) = 0.17
W/2L (opening width / bottom height) = 0.74
S2/S1 (area ratio of punch hole) = 0.22

<Example 2-13>

CPP (sealant layer: unstretched polypropylene) physical properties

Body: Product name: A, elastic modulus: 850 MPa
Bottom: Product name: C, elastic modulus: 505 MPa
Elastic modulus: Body>Bottom

Bottom shape

α (angle between bottom seal line and horizontal ridge of bottom tape) = 25°
a (minimum width of bottom seal portion) = 6 mm
L (bottom height) = 36 mm
Lateral width = 140 mm, Height = 180 mm
W (opening width) = 53 mm

Punch hole
Radius: 7.5 mm, number of punch holes: 1
Parameter

a/L (minimum width of bottom seal portion / bottom height) = 0.17
W/2L (opening width / bottom height) = 0.74
S2/S1 (area ratio of punch hole) = 0.22

<Example 2-14>

CPP (sealant layer: unstretched polypropylene) physical properties

Body: Product name: B, elastic modulus: 660 MPa
Bottom: Product name B, elastic modulus 660 MPa
Elastic modulus: Body=Bottom

Bottom shape

$\alpha$ (angle between bottom seal line and horizontal ridge of bottom tape) = 25°
a (minimum width of bottom seal portion) = 6 mm
L (bottom height) = 36 mm
Lateral width = 140 mm, Height = 180 mm
W (opening width) = 53 mm

Punch hole
Radius: 7.5 mm, number of punch holes: 1
Parameter

a/L (minimum width of bottom seal portion / bottom height) = 0.17
W/2L (opening width / bottom height) = 0.74
S2/S1 (area ratio of punch hole) = 0.22

<Example 2-15>

CPP (sealant layer: unstretched polypropylene) physical properties

Body: Product name: A, elastic modulus: 850 MPa
Bottom: Product name B, elastic modulus 660 MPa
Elastic modulus: Body>Bottom

Bottom shape

$\alpha$ (angle between bottom seal line and horizontal ridge of bottom tape) = 25°
a (minimum width of bottom seal portion) = 10 mm
L (bottom height) = 40 mm
Lateral width = 140 mm, Height = 180 mm
W (opening width) = 51 mm

Punch hole
Radius: 7.5 mm, number of punch holes: 1
Parameter

a/L (minimum width of bottom seal portion / bottom height) = 0.25
W/2L (opening width / bottom height) = 0.64

S2/S1 (area ratio of punch hole) = 0.22

<Example 2-16>

CPP (sealant layer: unstretched polypropylene) physical properties

Body: Product name: A, elastic modulus: 850 MPa
Bottom: Product name: C, elastic modulus: 505 MPa
Elastic modulus: Body>Bottom

Bottom shape

$\alpha$ (angle between bottom seal line and horizontal ridge of bottom tape) = 25°
a (minimum width of bottom seal portion) = 10 mm
L (bottom height) = 40 mm
Lateral width = 140 mm, Height = 180 mm
W (opening width) = 51 mm

Punch hole
Radius: 7.5 mm, number of punch holes: 1
Parameter

a/L (minimum width of bottom seal portion / bottom height) = 0.25
W/2L (opening width / bottom height) = 0.64
S2/S1 (area ratio of punch hole) = 0.22

<Example 2-17>

CPP (sealant layer: unstretched polypropylene) physical properties

Body: Product name: A, elastic modulus: 850 MPa
Bottom: Product name B, elastic modulus 660 MPa
Elastic modulus: Body>Bottom

Bottom shape

$\alpha$ (angle between bottom seal line and horizontal ridge of bottom tape) = 25°
a (minimum width of bottom seal portion) = 15 mm
L (bottom height) = 40 mm
Lateral width = 140 mm, Height = 180 mm
W (opening width) = 45 mm

Punch hole
Radius: 7.5 mm, number of punch holes: 1
Parameter

a/L (minimum width of bottom seal portion / bottom height) = 0.38
W/2L (opening width / bottom height) = 0.56
S2/S1 (area ratio of punch hole) = 0.22

<Example 2-18>

CPP (sealant layer: unstretched polypropylene) physical properties

Body: Product name: A, elastic modulus: 850 MPa
Bottom: Product name: C, elastic modulus: 505 MPa
Elastic modulus: Body>Bottom

Bottom shape

$\alpha$ (angle between bottom seal line and horizontal ridge of bottom tape) = 25°
a (minimum width of bottom seal portion) = 15 mm
L (bottom height) = 40 mm
Lateral width = 140 mm, Height = 180 mm
W (opening width) = 45 mm

Punch hole
Radius: 7.5 mm, number of punch holes: 1
Parameter

a/L (minimum width of bottom seal portion / bottom height) = 0.38
W/2L (opening width / bottom height) = 0.56
S2/S1 (area ratio of punch hole) = 0.22

<Example 2-19>

CPP (sealant layer: unstretched polypropylene) physical properties

Body: Product name: B, elastic modulus: 660 MPa
Bottom: Product name B, elastic modulus 660 MPa
Elastic modulus: Body=Bottom

Bottom shape

$\alpha$ (angle between bottom seal line and horizontal ridge of bottom tape) = 25°
a (minimum width of bottom seal portion) = 15 mm
L (bottom height) = 40 mm
Lateral width = 140 mm, Height = 180 mm
W (opening width) = 45 mm

Punch hole
Radius: 7.5 mm, number of punch holes: 1
Parameter

a/L (minimum width of bottom seal portion / bottom height) = 0.38
W/2L (opening width / bottom height) = 0.56
S2/S1 (area ratio of punch hole) = 0.22

<Example 2-20>

CPP (sealant layer: unstretched polypropylene) physical properties

Body: Product name: C, elastic modulus 505 MPa
Bottom: Product name: C, elastic modulus: 505 MPa
Elastic modulus: Body=Bottom

Bottom shape

α (angle between bottom seal line and horizontal ridge of bottom tape) = 25°
a (minimum width of bottom seal portion) = 15 mm
L (bottom height) = 40 mm
Lateral width = 140 mm, Height = 180 mm
W (opening width) = 45 mm

Punch hole
Radius: 7.5 mm, Number of punch holes: 1
Parameter

a/L (minimum width of bottom seal portion / bottom height) = 0.38
W/2L (opening width / bottom height) = 0.56
S2/S1 (area ratio of punch hole) = 0.22

<Example 2-21>

CPP (sealant layer: unstretched polypropylene) physical properties

Body: Product name: B, elastic modulus: 660 MPa
Bottom: Product name B, elastic modulus 660 MPa
Elastic modulus: Body=Bottom

Bottom shape

α (angle between bottom seal line and horizontal ridge of bottom tape) = 25°
a (minimum width of bottom seal portion) = 15 mm
L (bottom height) = 40 mm
Lateral width = 140 mm, Height = 180 mm
W (opening width) = 50 mm

Punch hole
Radius: 6 mm, Number of punch holes: 2
Parameter

a/L (minimum width of bottom seal portion / bottom height) = 0.38
W/2L (opening width / bottom height) = 0.63
S2/S1 (area ratio of punch holes) = 0.37

<Example 2-22>

CPP (sealant layer: unstretched polypropylene) physical properties

Body: Product name: B, elastic modulus: 660 MPa
Bottom: Product name B, elastic modulus 660 MPa
Elastic modulus: Body=Bottom

Bottom shape

α (angle between bottom seal line and horizontal ridge of bottom tape) = 25°
a (minimum width of bottom seal portion) = 15 mm
L (bottom height) = 40 mm
Lateral width = 140 mm, Height = 180 mm

W (opening width) = 50 mm

Punch hole
Radius: 7.5 mm, Number of punch holes: 2
Parameter

a/L (minimum width of bottom seal portion / bottom height) = 0.38
W/2L (opening width / bottom height) = 0.63
S2/S1 (area ratio of punch holes) = 0.44

<Comparative Example 2-1>

CPP (sealant layer: unstretched polypropylene) physical properties

Body: Product name: B, elastic modulus: 660 MPa
Bottom: Product name B, elastic modulus 660 MPa
Elastic modulus: Body=Bottom

Bottom shape

$\alpha$ (angle between bottom seal line and horizontal ridge of bottom tape) = 55°
a (minimum width of bottom seal portion) = 6 mm
L (bottom height) = 40 mm
Lateral width = 140 mm, Height = 180 mm
W (opening width) = 68 mm

Punch hole
Radius: 7.5 mm, number of punch holes: 1
Parameter

a/L (minimum width of bottom seal portion / bottom height) = 0.15
W/2L (opening width / bottom height) = 0.83
S2/S1 (area ratio of punch hole) = 0.22

<Comparative Example 2-2>

CPP (sealant layer: unstretched polypropylene) physical properties

Body: Product name: B, elastic modulus: 660 MPa
Bottom: Product name B, elastic modulus 660 MPa
Elastic modulus: Body=Bottom

Bottom shape

$\alpha$ (angle between bottom seal line and horizontal ridge of bottom tape) = 18°
a (minimum width of bottom seal portion) = 6 mm
L (bottom height) = 40 mm
Lateral width = 140 mm, Height = 180 mm
W (opening width) = 68 mm

Punch hole
Radius: 7.5 mm, number of punch holes: 1
Parameter

a/L (minimum width of bottom seal portion / bottom height) = 0.21
W/2L (opening width / bottom height) = 0.55
S2/S1 (area ratio of punch hole) = 0.22

The evaluation results are shown in Table 2.

[Table 2]

| | CPP elastic modulus (Mpa) | | | Bottom shape | Drop testing | | | | Self-supporting properties |
|---|---|---|---|---|---|---|---|---|---|
| | Body (A) | | Bottom (B) | Angle α ° | Number of bags without breakage | Average number of drops bag was broken | Evaluation | Evaluation | |
| Ex. 2-1 | 850 | > | 660 | 45 | 2 | 3.4 | B | A | |
| Ex. 2-2 | 850 | > | 505 | 45 | 2 | 2.8 | B | A | |
| Ex. 2-3 | 660 | = | 660 | 45 | 3 | 8 | B | A | |
| Ex. 2-4 | 505 | = | 505 | 45 | 8 | 11.1 | A | A | |
| Ex. 2-5 | 850 | > | 660 | 45 | 4 | 7.3 | B | A | |
| Ex. 2-6 | 850 | > | 505 | 45 | 8 | 9.7 | A | A | |
| Ex. 2-7 | 660 | = | 660 | 45 | 8 | 12.5 | A | A | |
| Ex. 2-8 | 850 | > | 660 | 45 | 7 | 7.3 | B | A | |
| Ex. 2-9 | 850 | > | 505 | 45 | 8 | 11.7 | A | A | |
| Ex. 2-10 | 660 | = | 660 | 45 | 10 | 16.5 | S2 | A | |
| Ex. 2-11 | 505 | = | 505 | 45 | 10 | 39.1 | S1 | A | |
| Ex. 2-12 | 850 | > | 660 | 25 | 8 | 10.5 | A | A | |
| Ex. 2-13 | 850 | > | 505 | 25 | 9 | 17.3 | A | A | |
| Ex. 2-14 | 660 | = | 660 | 25 | 10 | 19.8 | S2 | A | |
| Ex. 2-15 | 850 | > | 660 | 25 | 9 | 9.3 | A | A | |
| Ex. 2-16 | 850 | > | 505 | 25 | 10 | 16.7 | S2 | A | |
| Ex. 2-17 | 850 | > | 660 | 25 | 9 | 10.6 | A | B | |
| Ex. 2-18 | 850 | > | 505 | 25 | 10 | 20.2 | S2 | B | |
| Ex. 2-19 | 660 | = | 660 | 25 | 10 | 28.7 | S1 | B | |
| Ex. 2-20 | 505 | = | 505 | 25 | 10 | 53 | S1 | B | |
| Ex. 2-21 | 660 | = | 660 | 25 | 10 | 30.2 | S1 | A | |
| Ex. 2-22 | 660 | = | 660 | 25 | 10 | 32.5 | S1 | A | |
| Comp. Ex. 2-1 | 660 | = | 660 | 55 | 0 | 1.6 | C | A | |
| Comp. Ex. 2-2 | 660 | = | 660 | 18 | 0 | - | C | C | |

As can be seen from Table 2, all the packaging bags with the angle α between the bottom seal line and the horizontal ridge of the bottom tape being less than 20° and more than 45° were evaluated to be C for drop testing and part of them were also evaluated to be C for self-supporting properties.

In contrast, Examples 2-1 to 2-22 with the angle α being 20° or greater and 45° or less were all evaluated to be B or higher for both of drop testing and self-supporting properties, clearly indicating that the self-supporting packaging bag of the present disclosure is superior.

Thus, it has been verified that a monomaterialized self-supporting packaging bag can be provided, which is capable of improving drop impact resistance without changing the appearance, without using separate members or an excessive material composition for reinforcement, and without sacrificing self-supporting properties.

[Reference Signs List]

1, 111, 131 ... Substrate layer
2 ... Gas barrier layer
3, 112, 132 ... Sealant layer
5, 6, 103 ... Bottom seal portion
7, 101 ... Side seal portion
8 ... Cutout
9, 134 ... Joint
10, 20, 110, 120 ... Body
30, 130 ... Bottom tape
30a, 133 ... Mountain fold
30d, 121 ... Base
60, 61 ... Unsealed portion
65, 66, 104 ... Bottom seal line
50, 70, 90, 100 ... Self-supporting packaging bag
L ... Distance
a ... Minimum width
R1 ... Region
W ... Opening width
$\alpha$ ... Angle

## Claims

1.  A self-supporting packaging bag formed by heat-sealing two body portions each including a substrate layer and a sealant layer, to a bottom tape including a substrate layer and a sealant layer and having a mountain fold, comprising

    two side seal portions adhering the two body portions to each other in a vertical direction of the self-supporting packaging bag; and
    bottom seal portions adhering the respective two body portions to the bottom tape in a horizontal direction of the self-supporting packaging bag, wherein
    the substrate layers and the sealant layers are made of similar resin materials;
    a ratio a/L of a minimum width a of each of the bottom seal portions to a distance L from a base of each of the body portions to the mountain fold is 0.15 or greater and 0.50 or less; and
    when a boundary between each of the bottom seal portions and an unsealed portion is defined to be a bottom seal line, an angle $\alpha$ between the mountain fold and the bottom seal line at a point where the mountain fold and the bottom seal line intersect is 20° or greater and 45° or less.

2.  The self-supporting packaging bag according to claim 1, wherein
    when an elastic modulus of a sealant used for the body portions is represented by A, and an elastic modulus of a sealant used for the bottom tape is represented by B, the following relationship is established:

$$B < 800 \, \mathrm{MPa}$$

3.  The self-supporting packaging bag according to claim 1 or 2, wherein
    when an elastic modulus of a sealant used for the body portions is represented by A, and an elastic modulus of a sealant used for the bottom tape is represented by B, the following relationship is established:

$$A \geq B$$

4.  The self-supporting packaging bag according to any one of claims 1 to 3, wherein

when an elastic modulus of a sealant used for the body portions is represented by A, and an elastic modulus of a sealant used for the bottom tape is represented by B, the following relationship is established at least for the elastic modulus B:

$$B \leq 600 \text{ MPa}$$

5. The self-supporting packaging bag according to any one of claims 1 to 4, wherein the angle $\alpha$ is 25° or greater and less than 30°.

6. The self-supporting packaging bag according to any one of claims 1 to 4, wherein the angle $\alpha$ is 40° or greater and 45° or less.

7. The self-supporting packaging bag according to any one of claims 1 to 6, wherein

conditions expressed by the following Inequality (1) are satisfied:

$$0.4 \leq W/2L \leq 0.8 \dots (1)$$

[In the inequality, W represents an opening width of the self-supporting packaging bag, and L represents a distance from a base of each of the body portions to the mountain fold.]

8. The self-supporting packaging bag according to any one of claims 1 to 7, wherein

the packaging bag further comprises joints at which the two body portions are adhered to each other through respective cutouts, the cutouts being provided to respective sides of the bottom tape; and
a ratio S2/S1 of an area S2 of each of the joints to an area S1 of a region R1 is 0.35 or greater and 0.60 or less, the region R1 being located between the base of each of the body portions and the mountain fold and extending a distance of 10 mm from a side of each of the body portions in an orthogonal direction.

9. The self-supporting packaging bag according to any one of claims 1 to 8, wherein the two body portions and the bottom tape each include a gas barrier layer.

10. The self-supporting packaging bag according to any one of claims 1 to 9, wherein the self-supporting packaging bag is used in applications where heat treatment is performed at a temperature of 80°C or higher.

# FIG.1

# FIG.2

# FIG.3

FIG.4

FIG.5

# FIG.6

# FIG.7

# FIG.8

(a)                                      40

(b)                                      40

EP 4 480 698 A1

# FIG.9

40

# FIG.10

# FIG.11

# FIG.12

<table>
<tr><td colspan="2" align="center">**INTERNATIONAL SEARCH REPORT**</td><td>International application No.<br><br>**PCT/JP2023/004448**</td></tr>
</table>

**A. CLASSIFICATION OF SUBJECT MATTER**

*B32B 27/00*(2006.01)i; *B65D 30/02*(2006.01)i; *B65D 30/16*(2006.01)i; *B65D 33/02*(2006.01)i; *B65D 65/40*(2006.01)i
FI: B65D30/16 C; B65D33/02; B65D30/02; B65D65/40 D; B32B27/00 H

According to International Patent Classification (IPC) or to both national classification and IPC

**B. FIELDS SEARCHED**

Minimum documentation searched (classification system followed by classification symbols)

B32B27/00; B65D30/02; B65D30/16; B65D33/02; B65D65/40

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-160260 A (DAINIPPON PRINTING CO., LTD.) 11 October 2021 (2021-10-11)<br>paragraphs [0027]-[0219], fig. 2 | 1, 5-6, 9 |
| Y | paragraphs [0027]-[0219], fig. 2 | 2-4, 7-8, 10 |
| Y | JP 2021-54417 A (DAINIPPON PRINTING CO., LTD.) 08 April 2021 (2021-04-08)<br>paragraphs [0030], [0041], [0086], [0087], [0104]-[0120], fig. 1, 2, 4, 5, 7 | 2-4, 7-8, 10 |
| Y | JP 2021-54416 A (DAINIPPON PRINTING CO., LTD.) 08 April 2021 (2021-04-08)<br>paragraphs [0031], [0042], [0078], [0079], [0104]-[0112], fig. 1, 2, 4, 5, 7 | 2-4, 7-8, 10 |
| Y | JP 2020-40702 A (HOSOKAWA YOKO CO., LTD.) 19 March 2020 (2020-03-19)<br>paragraphs [0026]-[0031], [0041], fig. 8, 9 | 7 |
| A | US 2016/0137374 A1 (BEMIS CO., INC.) 19 May 2016 (2016-05-19) | 1-10 |
| A | JP 2021-054076 A (DAINIPPON PRINTING CO., LTD.) 08 April 2021 (2021-04-08) | 1-10 |

☐ Further documents are listed in the continuation of Box C.        ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **27 March 2023** | **11 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2023/004448**

| Patent document cited in search report | | | Publication date (day/month/year) | Patent family member(s) | | | Publication date (day/month/year) |
|---|---|---|---|---|---|---|---|
| JP | 2021-160260 | A | 11 October 2021 | (Family: none) | | | |
| JP | 2021-54417 | A | 08 April 2021 | (Family: none) | | | |
| JP | 2021-54416 | A | 08 April 2021 | (Family: none) | | | |
| JP | 2020-40702 | A | 19 March 2020 | (Family: none) | | | |
| US | 2016/0137374 | A1 | 19 May 2016 | WO | 2014/204465 | A1 | |
| | | | | EP | 3010817 | A1 | |
| | | | | CN | 105324314 | A | |
| JP | 2021-054076 | A | 08 April 2021 | EP | 4039464 | A1 | |
| | | | | JP | 2021-79704 | A | |
| | | | | JP | 2021-138148 | A | |
| | | | | WO | 2021/065888 | A1 | |
| | | | | WO | 2021/065890 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7237281 A

- JP H7241967 A